# EUROPEAN PATENT APPLICATION

(11) **EP 4 266 211 A1**
(43) Date of publication of application: **25.10.2023**
(21) Application number: 21927621.9
(22) Date of filing: 17.11.2021
(51) Int. Cl.: G06K 9/62, G01S 7/41, G08G 1/017

(54) **INFORMATION PROCESSING METHOD AND RELATED DEVICE**

(30) Priority: 27.02.2021 CN 202110221913
(71) Applicant: Huawei Technologies Co., Ltd., Shenzhen, Guangdong 518129 (CN)
(72) Inventor: ZHU, Qiwei, Shenzhen, Guangdong 518129 (CN)
(74) Representative: Körber, Martin Hans
(86) International application number: PCT/CN2021/131058
(87) International publication number: WO 2022/179197

(57) **Abstract**

An information processing method and a related device are provided, to improve efficiency of fusion of detection information. The method includes: obtaining a plurality of pieces of detection information from a plurality of sensors, where the detection information includes detection information from different sensors for a same target object; obtaining corresponding formation information based on the plurality of pieces of detection information; determining target formation information based on the plurality of pieces of formation information, where the target formation information indicates detection information detected by different sensors for a same target object set; and fusing, based on formation position information of each target object in the target object set, the detection information that is in the plurality of pieces of formation information and that corresponds to a same target object.

## Description

This application claims priority to Chinese Patent Application No. 202110221913.6, filed on February 27, 2021 and entitled "INFORMATION PROCESSING METHOD AND RELATED DEVICE", which is incorporated herein by reference in its entirety.

### TECHNICAL FIELD

Embodiments of this application relate to the field of data processing, and in particular, to an information processing method and a related device.

### BACKGROUND

For a same target object, feature information that can be detected by sensors of different types is different. For example, a camera may detect an appearance feature of the target object, a radar may detect a moving speed and a distance of the target object. For a same target object, to obtain more feature information of the target object, detection results of different sensors need to be combined to obtain fused detection information of the target object.

To implement fusion of the detection results of the sensors of different types, space and time of different sensors need to be aligned. A space alignment procedure is as follows: obtaining pictures that can be detected by the sensors; determining calibration points in actual space; and associating positions of the calibration points in the actual space with positions in which the calibration points are displayed in the pictures. The foregoing operations are performed on a plurality of calibration points, to establish a mapping relationship between actual space and a picture detected by each sensor, that is, a mapping relationship between pictures detected by sensors is established. Then, time of different sensors is aligned. At a same moment, when object information is detected at a point in a picture detected by a sensor, and object information is detected at a point that is in a picture detected by another sensor and that corresponds to the point, it may be determined that the two pieces of information are information of a same object. Therefore, detection results from different sensors for the object may be combined together as fused detection information of the object.

Because this method needs to be implemented through manual calibration, efficiency of information fusion is low.

### SUMMARY

Embodiments of this application provide an information processing method, to implement fusion of detection information detected by different sensors, to improve efficiency of fusion of the detection information.

A first aspect of embodiments of this application provides an information processing method. The method is applied to a processing device in a monitoring system, and the detection system further includes a plurality of sensors. Detection information obtained by each of the plurality of sensors includes detection information of same a plurality of target objects. The method includes:

The processing device obtains a plurality of pieces of detection information from the plurality of sensors. The plurality of pieces of detection information are in a one-to-one correspondence with the plurality of sensors, and each of the plurality of pieces of detection information is detected by a sensor corresponding to the detection information. The processing device determines a plurality of pieces of corresponding formation information based on the plurality of pieces of detection information. The plurality of pieces of formation information are in a one-to-one correspondence with the plurality of pieces of detection information. Each piece of the formation information is used to describe a position relationship between objects detected by the corresponding sensors, and the objects include the foregoing target objects. The processing device determines target formation information based on the plurality of pieces of formation information. Matching degrees between the target formation information and the foregoing plurality of pieces of formation information are greater than a preset threshold. The target formation information is used to describe a position relationship between the foregoing plurality of target objects, and the target formation information includes formation position information of target objects. The processing device fuses, based on formation position information of any one of the target objects, the detection information that is in the plurality of pieces of formation information and that corresponds to a same target object.

In this embodiment of this application, the formation information of the objects detected by the sensors is separately determined based on the detection information from different sensors. The target formation information is determined based on the matching degree between the target formation information and each piece of formation information, so that the target object is determined. Because the target formation information is formation information that is detected by different sensors and that has similar features, and reflects information that is detected by different sensors and that is of the same target object, a correspondence, reflected in the target formation information, between detection results that are of any object and that are obtained by different sensors may be determined based on the target formation information. The detection results that are of the same object and that are obtained by different sensors may be fused based on the correspondence. Compared with a manual calibration method, the method used in this embodiment of this application obtains fused detection information based on the formation information, and greatly improves efficiency of obtaining the fused detection information.

In addition, in terms of information collection, the method in this embodiment of this application requires only the detection information from different sensors, without occupying any of a measured field. Therefore, applicability of fusion of the detection information is expanded.

With reference to the first aspect, in a first implementation of the first aspect of this embodiment of this application, the detection information may include a position feature set. The position feature set may include a plurality of position features, and the position features indicate position relationships between the objects detected by the corresponding sensors and objects around the objects.

In this embodiment of this application, the detection information includes the position feature set. The position feature set may accurately reflect the position relationship between the objects detected by the sensor, that is, may accurately determine the formation information based on the position relationship between the objects. Therefore, for the same target object, the detection information from different sensors are accurately fused.

With reference to the first implementation of the first aspect, in a second implementation of the first aspect of this embodiment of this application, that the processing device determines a plurality of pieces of corresponding formation information based on the plurality of pieces of detection information may specifically include: The processing device obtains a plurality of pieces of corresponding line touch information based on a plurality of position feature sets. Each of the plurality of pieces of line touch information is used to describe information that the objects detected by the corresponding sensors touch a reference line, and the foregoing plurality of pieces of line touch information are in a one-to-one correspondence with the foregoing plurality of pieces of position feature sets. The processing device separately determines the plurality of pieces of corresponding formation information based on the foregoing plurality of pieces of line touch information. The foregoing plurality of pieces of line touch information are in a one-to-one correspondence with the foregoing plurality of pieces of formation information.

In this embodiment of this application, the line touch information is obtained based on the position feature set. Because the line touch information is information that the object touches the reference line. Data including a specific value or a specific position feature, such as touch time, a touch interval, and a touch position, may be obtained when the object touches the reference line. Therefore, a set of line touch data, such as a number sequence including a plurality of touch time points, a number sequence including a plurality of touch intervals, or a distribution relationship including a plurality of touch positions, may be obtained based on specific values or specific position features that a plurality of target objects touch the line. Because the foregoing set of line touch data has specific values or position features, an operation may be directly performed, without any other data processing. Therefore, the target formation information whose matching degree meets the preset threshold may be quickly determined.

With reference to the second implementation of the first aspect, in a third implementation of the first aspect of this embodiment of this application, the target formation information may be determined based on a touch partition sequence, specifically including:

The line touch information includes time sequence information and touch point partition information that the objects detected by the corresponding sensors touch the reference line. The touch point partition information indicates partition information of touch points that are on the reference line and at which the objects touch the reference line. The formation information includes a touch partition sequence, and the touch partition sequence indicates a time sequence relationship between partition positions in which the objects detected by the corresponding sensors touch the reference line.

That the processing device determines target formation information based on the plurality of pieces of formation information may specifically include: The processing device obtains a first subsequence of a plurality of touch partition sequences, and uses the first subsequence as the target formation information, where matching degrees between the first subsequences and the plurality of touch partition sequences are greater than a first threshold.

That the processing device fuses, based on the foregoing formation position information of target objects, the detection information that is in the foregoing plurality of pieces of formation information and that corresponds to a same target object may specifically include: The processing device fuses, based on the touch point partition information that is in the first subsequence and that corresponds to each target object, the detection information that is in the plurality of touch partition sequences and that corresponds to the same target object.

In this embodiment of this application, the time sequence information indicates a time sequence that the different target objects touch the reference line, and the touch point partition information indicates a left-right relationship that the different target objects touch the reference line. A relationship of positions at which the plurality of target objects touch the reference line is reflected in the touch partition sequence by using the time sequence information indicating the time sequence and the touch point partition information indicating the left-right relationship. Because both the time sequence information and the touch point partition information are specific values, the touch partition sequence is a set of values reflecting a position relationship between the target objects. Corresponding touch partition sequences are obtained based on the detection information from different sensors. The plurality of obtained touch partition sequences are a plurality of value sets. To determine that a matching degree between the value sets meets a preset threshold, it requires only comparison between corresponding values, without complex operations. Therefore, efficiency of performing matching to determine the target formation information is improved.

With reference to the third implementation of the first aspect, in a fourth implementation of the first aspect of this embodiment of this application, a longest common subsequence (longest common sequence, LCS) algorithm may be used to determine, based on the plurality of touch partition sequences that are in the detection information from different sensors, a first subsequence whose matching degree with each touch partition sequence is greater than a first threshold. In this embodiment of this application, all common sequences of the plurality of touch partition sequences may be obtained by using the LCS algorithm, to implement matching of same position features in the plurality of touch partition sequences. Because a longest common subsequence is calculated by using the LCS algorithm, the foregoing first subsequence determined by using the LCS algorithm may include a longest subsequence in subsequences whose matching degrees with the foregoing plurality of touch partition sequences are greater than the first threshold.

In this embodiment of this application, all the common sequences of the plurality of touch partition sequences may be determined by using the LCS algorithm, to obtain, through matching, all segments that are of the touch partition sequences and that have the same position features. If a plurality of segments are the common sequences, and some non-common sequences are included in the common sequences, the non-common sequences included in the common sequences may be identified. The non-common sequences reflect different position relationships in different sensors. In this case, it may be considered that the non-common sequences are included in the common sequences due to false detection or missing detection of the sensors. Therefore, fault tolerance is performed on the non-common sequences, that is, the non-common sequences are allowed to correspond to the target objects detected by different sensors, to implement fusion of the detection information.

In this embodiment of this application, the first subsequence determined by using the LCS algorithm may include the longest subsequence in subsequences whose matching degrees with the foregoing plurality of touch partition sequences are greater than the first threshold. Position relationships between the target objects may be occasionally similar. Therefore, a longer length of the determined subsequence indicates a lower possibility of having similar position relationships, and as a result, a contingency may be more easily avoided. The longest subsequence is determined by using the LCS algorithm, so that target formation information of the same target object set may be accurately determined. For example, position relationships between two target objects may be occasionally similar. However, if a standard is improved to that position relationships of ten target objects have a high matching degree, a possibility that the ten target objects have similar position relationships is greatly lower than a possibility that the two target objects have similar position relationships. Therefore, if a first subsequence of the ten target objects is determined by using the LCS algorithm, a possibility that the ten target objects are same ten target objects that correspond to detection results obtained by different sensors is higher, and a possibility of a mismatch is reduced.

With reference to the second implementation of the first aspect, in a fifth implementation of the first aspect of this embodiment of this application, the target formation information may be determined based on a touch position sequence, specifically including:

The line touch information includes time sequence information and touch point position information that the objects detected by the corresponding sensors touch the reference line. The touch point position information indicates position information of touch points that are on the reference line and at which the objects touch the reference line, and reflects a left-right position relationship between the target objects. The formation information includes a touch position sequence, and the touch position sequence indicates a time sequence relationship between positions in which the objects detected by the corresponding sensors touch the reference line.

That the processing device determines target formation information based on the plurality of pieces of formation information may specifically include: The processing device obtains a third subsequence of a plurality of touch position sequences, and uses the third subsequence as the target formation information, where matching degrees between the third subsequence and the plurality of touch position sequences are greater than a third threshold.

That the processing device fuses, based on the foregoing formation position information of target objects, the detection information that is in the foregoing plurality of pieces of formation information and that corresponds to a same target object may specifically include: The processing device fuses, based on touch point position information that is in the third subsequence and that corresponds to each target object, the detection information that is in the plurality of touch position sequences and that corresponds to the same target object.

In this embodiment of this application, the touch point position information indicates a left-right relationship that the different target objects touch the reference line, and may be consecutive values or data. Therefore, based on the consecutive values or data, formation information of the target object may be more accurately distinguished from formation information of another non-target object. Therefore, detection information of the same target object is more accurately fused.

In addition, a motion trend between the target objects may be analyzed or calculated based on the consecutive values or data. In addition to the motion trend, other information, for example, movement tracks of the target objects, may be further calculated. This is not limited herein.

With reference to the second implementation of the first aspect, in a sixth implementation of the first aspect of this embodiment of this application, the target formation information may be determined based on a touch interval sequence, specifically including:

The line touch information includes time sequence information and touch time interval information that the objects detected by the corresponding sensors touch the reference line. The touch time interval information indicates a time interval at which the objects touch the reference line. The formation information includes a touch interval sequence, and the touch interval sequence indicates distribution of time intervals at which the objects detected by the corresponding sensors touch the reference line.

That the processing device determines target formation information based on the plurality of pieces of formation information may specifically include: The processing device obtains a second subsequence of a plurality of touch interval sequences, and uses the second subsequence as the target formation information, where matching degrees between the second subsequences and the plurality of touch interval sequences are greater than a second threshold.

That the processing device fuses, based on formation position information of target objects, the detection information that is in at least two pieces of formation information and that corresponds to a same target object includes: The processing device fuses, based on touch time distribution information that is in the second subsequence and that corresponds to each target object, the detection information that is in at least two of the touch interval sequences and that corresponds to the same target object.

In this embodiment of this application, the time sequence information indicates a time sequence that the different target objects touch the reference line, and the touch time interval information indicates a time interval at which the different target objects touch the reference line. A relationship of positions at which the plurality of target objects touch the reference line is reflected in the touch interval sequence by using the time sequence information indicating the time sequence and the touch time interval information indicating the time interval. Because both the time sequence information and the touch time interval information are specific values, the touch interval sequence is a set of values reflecting a position relationship between the target objects. Corresponding touch interval sequences are obtained based on the detection information from different sensors. The plurality of obtained touch interval sequences are a plurality of value sets. To determine that a matching degree between the value sets meets a preset threshold, it requires only comparison between corresponding values, without complex operations. Therefore, efficiency of performing matching to determine the target formation information is improved.

With reference to the sixth implementation of the first aspect, in a seventh implementation of the first aspect of this embodiment of this application, the LCS algorithm may be used to determine, based on the plurality of touch interval sequences that are in the detection information from different sensors, a second subsequence whose matching degree with each touch interval sequence is greater than the second threshold. In this embodiment of this application, all common sequences of the plurality of touch interval sequences may be obtained by using the LCS algorithm, to implement matching of same position features in the plurality of touch interval sequences. Because a longest common subsequence is calculated by using the LCS algorithm, the foregoing second subsequence determined by using the LCS algorithm may include a longest subsequence in subsequences whose matching degrees with the foregoing plurality of touch interval sequences are greater than the second threshold.

In this embodiment of this application, all the common sequences of the plurality of touch interval sequences may be determined by using the LCS algorithm, to obtain, through matching, all segments that are of the touch interval sequences and that have the same position features. If a plurality of segments are the common sequences, and some non-common sequences are included in the common sequences, the non-common sequences included in the common sequences may be identified. The non-common sequences reflect different position relationships in different sensors. In this case, it may be considered that the non-common sequences are included in the common sequences due to false detection or missing detection of the sensors. Therefore, fault tolerance is performed on the non-common sequences, that is, the non-common sequences are allowed to correspond to the target objects detected by different sensors, to implement fusion of the detection information.

In this embodiment of this application, the second subsequence determined by using the LCS algorithm may include the longest subsequence in subsequences whose matching degrees with the plurality of touch interval sequences are greater than the second threshold. Time intervals at which the target objects touch the reference line may be occasionally similar. Therefore, a longer length of the determined subsequence indicates a lower possibility of having similar time intervals, and as a result, a contingency may be more easily avoided. The longest subsequence is determined by using the LCS algorithm, so that target formation information of the same target object set may be accurately determined. For example, time intervals at which two target objects touch the reference line may be occasionally similar. However, if a standard is improved to that time intervals of ten target objects have a high matching degree, a possibility that the ten target objects touch the reference line at similar time intervals is greatly lower than a possibility that the two target objects touch the reference line at similar time intervals. Therefore, if a second subsequence of the ten target objects is determined by using the LCS algorithm, a possibility that the ten target objects are same ten target objects that correspond to detection results obtained by different sensors is higher, and a possibility of a mismatch is reduced.

With reference to the second implementation of the first aspect, in an eighth implementation of the first aspect of this embodiment of this application, the target formation information may be determined based on a touch partition sequence and a touch interval sequence, specifically including:

The line touch information includes time sequence information, touch point partition information, and touch time interval information that the objects detected by the corresponding sensors touch the reference line. The touch point partition information indicates partition information of touch points that are on the reference line and at which the objects touch the reference line. The touch time interval information indicates a time interval at which the objects touch the reference line. The formation information includes a touch partition sequence and a touch interval sequence, where the touch partition sequence indicates a time sequence relationship between partition positions in which the objects detected by the corresponding sensors touch the reference line, and the touch interval sequence indicates distribution of time intervals at which the objects detected by the corresponding sensors touch the reference line.

That the processing device determines target formation information based on the plurality of pieces of formation information may specifically include:

The processing device obtains first subsequences of at least two touch partition sequences, where matching degrees between the first subsequences and a plurality of touch partition sequences are greater than a first threshold. The processing device obtains second subsequences of at least two touch interval sequences, where matching degrees between the second subsequences and a plurality of touch interval sequences are greater than a second threshold. The processing device determines an intersection of a first object set and a second object set, and uses the intersection as a target object set, where the first object set is a set of objects corresponding to the first subsequence, and the second object set is a set of objects corresponding to the second subsequence. The processing device uses a touch partition sequence and a touch interval sequence of the target object set as the target formation information.

In this embodiment of this application, the intersection of the first object set and the second object set is determined based on the first object set corresponding to the first subsequence and the second object set corresponding to the second subsequence, and the intersection is used as the target object set. Objects in the intersection correspond to the first subsequence, that is, similar touch partition information may be obtained based on detection information from different sensors. In addition, the objects in the intersection correspond to the second subsequence, that is, similar touch time interval information exists based on the detection information from different sensors. If a plurality of pieces of similar information indicating a position relationship between the objects may be obtained based on the detection information from the plurality of sensors, a possibility that object sets corresponding to the detection information are a same object set is higher than that when only one piece of similar information indicating a position relationship between the objects may be obtained. Therefore, the intersection of the objects corresponding to the plurality of subsequences is filtered to accurately distinguish formation information of the target object from formation information of another non-target object. Therefore, detection information of the same target object is more accurately fused.

In this embodiment of this application, in addition to the intersection of objects corresponding to the first subsequence and objects corresponding to the second subsequence, an intersection of objects corresponding to other subsequences may also be used, for example, an intersection of the objects corresponding to the first subsequence and objects corresponding to a third subsequence, an intersection of the objects corresponding to the second subsequence and the objects corresponding to the third subsequence, or an intersection of objects corresponding to another subsequence and the objects corresponding to any one of the first to the third subsequences. Other subsequences are also used to indicate a position relationship between the objects, for example, a distance or a direction between the objects. This is not limited herein. An intersection of objects corresponding to different subsequences is obtained, so that an appropriate subsequence may be flexibly selected for operation, thereby improving feasibility and flexibility of the solution.

In this embodiment of this application, in addition to an intersection of objects corresponding to two subsequences, an intersection of objects corresponding to more subsequences may be obtained, for example, an intersection of the objects corresponding to the first subsequence, the second subsequence, and the third subsequence is obtained. When a larger quantity of subsequences is used, it indicates that more types of similar information indicating position relationships between the objects may be obtained based on the detection information from the plurality of sensors, and a possibility that object sets corresponding to the detection information are a same object set is higher. Therefore, screening is performed on the intersection of the objects corresponding to the plurality of subsequences, so that formation information of the target object may be more accurately distinguished from formation information of another non-target object. Therefore, detection information of the same target object is more accurately fused.

With reference to the first implementation of the first aspect, in a ninth implementation of the first aspect of this embodiment of this application, the target formation information may be determined based on a target group distribution graph, specifically including:

The formation information includes a target group distribution graph, and the target group distribution graph indicates a position relationship between the objects.

That the processing device determines a plurality of pieces of corresponding formation information based on the plurality of pieces of detection information may specifically include: The processing device obtains a plurality of corresponding initial target group distribution graphs based on a plurality of position feature sets, where the initial target group distribution graph indicates a position relationship between objects detected by the corresponding sensors. The processing device obtains standard viewport graphs of the plurality of initial target group distribution graphs by using a viewport change algorithm, and uses the plurality of standard viewport graphs as a plurality of corresponding target group distribution graphs, where formation position information of the target group distribution graph includes target object distribution information of the target objects, and the target object distribution information indicates positions of the target objects in the objects detected by the corresponding sensors.

That the processing device determines target formation information based on the at least two pieces of formation information may specifically include: The processing device obtains image feature sets of the plurality of target group distribution graphs, and uses the image feature set as the target formation information, where matching degrees between the image feature sets and the plurality of target group distribution graphs are greater than a third threshold.

That the processing device fuses, based on formation position information of target objects, the detection information that is in the plurality of pieces of formation information and that corresponds to a same target object may specifically include: The processing device fuses, based on target object distribution information that is in the image feature set and that corresponds to each target object, the detection information that is in the plurality of target group distribution graphs and that corresponds to the same target object.

In this embodiment of this application, the plurality of corresponding initial target group distribution graphs are obtained based on the detection information from different sensors, the plurality of corresponding target group distribution graphs are obtained by using the viewport change algorithm. Then, the image feature sets of the plurality of target group distribution graphs are obtained, and the image feature set is used as the target formation information. The image feature set whose matching degrees between the image feature sets and the plurality of target group distribution graphs are greater than a preset threshold is determined based on the plurality of target group distribution graphs from the plurality of sensors. The image features may intuitively reflect a position relationship between the objects displayed in the picture. Therefore, the image feature set is determined based on a plurality of target group distribution graphs, so that detection results indicating similar position relationships may be intuitively reflected. That is, detection results that are of a same target group and that are obtained by different sensors may be determined through matching. In this way, the detection information is accurately fused.

With reference to the ninth implementation of the first aspect, in a tenth implementation of the first aspect of this embodiment of this application, the image feature set may be obtained based on a reference line, specifically including:

The processing device may obtain, based on the plurality of position feature sets, a plurality of pieces of line touch information of the target objects corresponding to the position feature sets, where each of the plurality of pieces of line touch information is used to describe information that the objects detected by the corresponding sensors touch a reference line, and the plurality of pieces of line touch information are in a one-to-one correspondence with the plurality of position feature sets.

That the processing device obtains a plurality of corresponding initial target group distribution graphs based on a plurality of position feature sets may specifically include: The processing device obtains the plurality of corresponding initial target group distribution graphs based on a plurality of pieces of line touch information, where objects in the plurality of initial target group distribution graphs have same line touch information.

In this embodiment of this application, similarity between images obtained at close time points is high. Therefore, if a same time point is not specified, when matching is performed on the initial target object distribution graphs from different sensors, interference is introduced due to an initial target group distribution graph obtained at a close time point. As a result, an error occurs when matching is performed on the distribution graphs, and an error occurs when the image feature set is obtained. Consequently, detection information obtained at different moments is fused, causing an error in fusion of the detection information. This error can be avoided by using the line touch information. Specifically, the plurality of initial target group distribution graphs are determined by using the line touch information. The plurality of initial target group distribution graphs have same line touch information. This indicates that the plurality of initial target group distribution graphs are obtained at a same time point, and may ensure that the detection information for fusion is obtained at the same time point, thereby improving accuracy of fusion of the detection information.

With reference to any one of the first aspect, and the first implementation to the tenth implementation of the first aspect, in an eleventh implementation of the first aspect of this embodiment of this application, mapping between spatial coordinate systems of different sensors may be implemented, specifically including:

A plurality of sensors include a first sensor and a second sensor, where a spatial coordinate system corresponding to the first sensor is a standard coordinate system, and a spatial coordinate system corresponding to the second sensor is a target coordinate system. The method further includes:

The processing device determines, based on fused detection information, mapping relationships between a plurality of pieces of standard point information and a plurality of pieces of target point information. The fused detection information is obtained by fusing the detection information that is in the plurality of pieces of formation information and that corresponds to a same target object, the standard point information indicates position information of objects that are in the target object set and that are in the standard coordinate system, the target point information indicates position information of the objects that are in the target object set and that are in the target coordinate system, and the plurality of pieces of standard point information are in a one-to-one correspondence with the plurality of pieces of target point information. The processing device determines a mapping relationship between the standard coordinate system and the target coordinate system based on the mapping relationship between the standard point information and the target point information.

In this embodiment of this application, the mapping relationships between the plurality of pieces of standard point information and the plurality of pieces of target point information are determined based on the fused detection information, and the mapping relationship between the standard coordinate system and the target coordinate system is determined based on the mapping relationships between the plurality of pieces of standard point information and the plurality of pieces of target point information. According to the method in this embodiment of this application, mapping between coordinate systems of different sensors may be implemented provided that detection information from different sensors can be obtained. Subsequent steps of determining the target formation information, performing mapping on the point information, and the like may be implemented by the processing device, without manual calibration and mapping. The processing device performs matching on the target formation information, so that an accurate operation by the device improves accuracy of point information mapping. In addition, fusion of the detection information and mapping between the coordinate systems may be implemented provided that the detection information from different sensors can be obtained. This avoids a scenario limitation caused by manual calibration, and ensures accuracy and universality of fusion of the detection information.

With reference to any one of the first aspect, and the first implementation to the eleventh implementation of the first aspect, in a twelfth implementation of the first aspect of this embodiment of this application, time axes of different sensors may be further aligned. Specifically, the method may further include:

The processing device calculates a time difference between time axes of the plurality of sensors based on a fusion result of the detection information that is in the plurality of pieces of formation information and that corresponds to the same target object.

In this embodiment of this application, the time difference between the time axes of the plurality of sensors is calculated based on the fusion result of the detection information of the same target object, so that the time axes of different sensors may be aligned based on the time difference. The time axis alignment method provided in this embodiment of this application may be implemented provided that the detection information from different sensors can be obtained. The plurality of sensors do not need to be in a same time synchronization system. This extends an application scenario of time axis alignment of different sensors, and also extends an application scope of information fusion.

With reference to any one of the first aspect, or the first implementation to the twelfth implementation of the first aspect, in a thirteenth implementation of the first aspect of this embodiment of this application, error correction or screening may be further performed on the sensors. Specifically, the plurality of sensors include a standard sensor and a to-be-detected sensor, and the method may further include:

The processing device obtains standard formation information that is in the target formation information and that corresponds to the standard sensor. The processing device obtains to-be-detected formation information that is in the target formation information and that corresponds to the to-be-detected sensor. The processing device determines a difference between the to-be-detected formation information and the standard formation information. The processing device obtains an error parameter based on the foregoing difference and the standard formation information, where the error parameter indicates an error of the to-be-detected formation information, or indicates a performance parameter of the to-be-detected sensor.

In this embodiment of this application, the standard sensor is used as a standard for detection, and the error parameter is obtained based on the difference between the to-be-detected formation information and the standard formation information. When the error parameter indicates the error of the to-be-detected formation information, information that is in the to-be-detected formation information and that corresponds to the error parameter may be corrected based on the error parameter and the standard formation information. When the error parameter indicates the performance parameter of the to-be-detected sensor, a performance parameter such as a false detection rate of the to-be-detected sensor may be determined. Therefore, data analysis is implemented for the to-be-detected sensor, to select a sensor.

A second aspect of this application provides a processing device. The processing device is located in a detection system. The detection system further includes at least two sensors. Detection information obtained by the at least two sensors includes detection information separately from the at least two sensors for at least two same target objects. The processing device includes a processor and a transceiver.

The transceiver is configured to obtain at least two pieces of the detection information from the at least two sensors, where the at least two sensors are in a one-to-one correspondence with the at least two pieces of detection information.

The processor is configured to: determine at least two pieces of corresponding formation information based on the at least two pieces of detection information, where each piece of formation information is used to describe a position relationship between objects detected by the corresponding sensors, and the objects include the target objects; determine target formation information based on the at least two pieces of formation information, where a matching degree between the target formation information and each of the at least two pieces of formation information is greater than a preset threshold, the target formation information is used to describe a position relationship between the at least two target objects, and the target formation information includes formation position information of target objects; and fuse, based on formation position information of any one of the target objects, the detection information that is in the at least two pieces of formation information and that corresponds to a same target object.

The processing device is configured to perform the method according to the foregoing first aspect.

For beneficial effects of the second aspect, refer to the first aspect. Details are not described herein again.

A third aspect of this embodiment of this application provides a processing device. The device includes a processor and a memory coupled to the processor. The memory is configured to store executable instructions, where the executable instructions are used to instruct the processor to perform the method according to the first aspect.

A fourth aspect of this embodiment of this application provides a computer-readable storage medium. The computer-readable storage medium stores a program, and when a computer executes the program, the method according to the first aspect is performed.

A fifth aspect of this embodiment of this application provides a computer program product. When the computer program product runs on a computer, the computer performs the method according to the first aspect.

### BRIEF DESCRIPTION OF DRAWINGS

FIG. 1a is a schematic diagram of alignment of time axes of a plurality of sensors;
FIG. 1b is a schematic diagram of alignment of spatial coordinate systems of a plurality of sensors;
FIG. 2 is a schematic diagram of matching target objects according to an embodiment of this application;
FIG. 3a is a schematic diagram of a system of an information processing method according to an embodiment of this application;
FIG. 3b is a schematic diagram of an application scenario of an information processing method according to an embodiment of this application;
FIG. 4 is a schematic flowchart of an information processing method according to an embodiment of this application;
FIG. 5 is a schematic diagram of features of an information processing method according to an embodiment of this application;
FIG. 6 is a schematic diagram of a line drawing method according to an embodiment of this application;
FIG. 7 is another schematic flowchart of an information processing method according to an embodiment of this application;
FIG. 8 is another schematic diagram of an application scenario of an information processing method according to an embodiment of this application;
FIG. 9 is another schematic flowchart of an information processing method according to an embodiment of this application;
FIG. 10 is a schematic diagram of another application scenario of an information processing method according to an embodiment of this application;
FIG. 11 is another schematic flowchart of an information processing method according to an embodiment of this application;
FIG. 12 is a schematic diagram of another application scenario of an information processing method according to an embodiment of this application;
FIG. 13 is another schematic flowchart of an information processing method according to an embodiment of this application;
FIG. 14 is a schematic diagram of another application scenario of an information processing method according to an embodiment of this application;
FIG. 15 is another schematic flowchart of an information processing method according to an embodiment of this application;
FIG. 16 is another schematic diagram of an information processing method according to an embodiment of this application;
FIG. 17 is another schematic flowchart of an information processing method according to an embodiment of this application;
FIG. 18 is a schematic diagram of another application scenario of an information processing method according to an embodiment of this application;
FIG. 19 is a schematic diagram of another application scenario of an information processing method according to an embodiment of this application;
FIG. 20 is a schematic diagram of a structure of a processing device according to an embodiment of this application; and
FIG. 21 is a schematic diagram of another structure of a processing device according to an embodiment of this application.

### DESCRIPTION OF EMBODIMENTS

Embodiments of this application provide an information processing method and a related device, to fuse detection information detected by different sensors, to improve efficiency of fusing the detection information.

The sensor may detect an object. For a same object, different sensors may obtain different detection information through detection. For example, a camera may detect an appearance feature such as a shape and texture of an object, and a radar may detect motion information such as a position and a speed of the object. To obtain a plurality of types of information about a same object, detection information from different sensors needs to be fused.

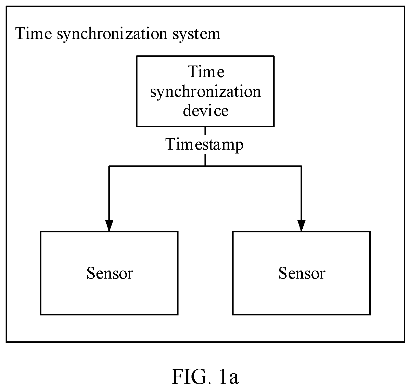

To implement fusion of the detection information, time axes and spatial coordinate systems of different sensors need to be aligned. Alignment of the time axes requires that the sensors are in a same time synchronization system. FIG. 1a is a schematic diagram of alignment of time axes of a plurality of sensors. A time synchronization device in a time synchronization system generates a timestamp, and transmits the timestamp to the plurality of sensors in the time synchronization system. The plurality of sensors in the time synchronization system are detected based on the same timestamp, so that alignment of the time axes may be implemented.

Because the timestamp of the time synchronization device may be transmitted only in the time synchronization system, and a sensor outside the time synchronization system cannot receive the timestamp, alignment of the time axes may be implemented only in a same time synchronization system. This factor limits an application scenario of fusion of the detection information.

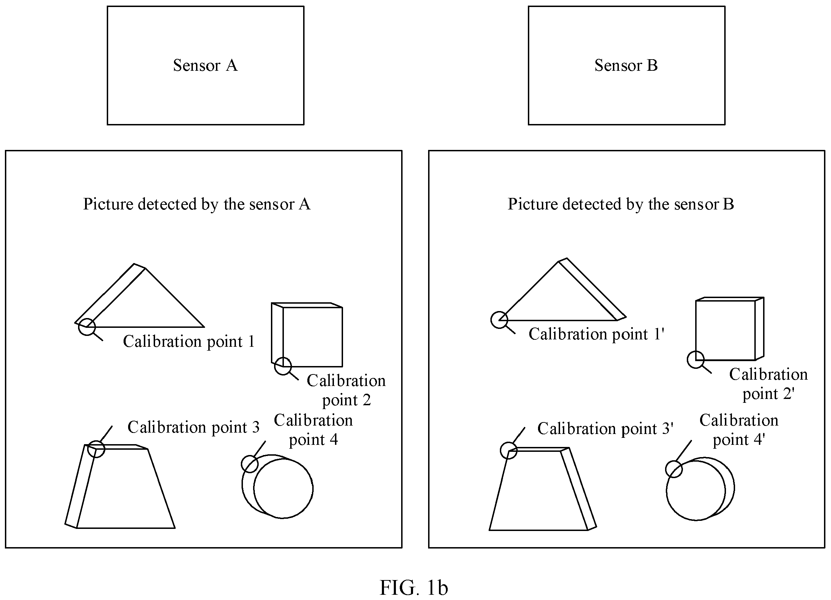

In addition, alignment of the spatial coordinate systems needs to be implemented through spatial calibration. FIG. 1b is a schematic diagram of alignment of spatial coordinate systems of a plurality of sensors. For spatial calibration, a calibration point in actual space needs to be determined. Positions of the calibration point in pictures detected by different sensors are manually calibrated. For example, a calibration point 4 is calibrated in a picture detected by a sensor A, and a corresponding calibration point 4' is calibrated in a picture detected by a sensor B. Then, a mapping relationship between positions of the same calibration point in the pictures detected by different sensors is manually determined. To ensure accuracy of the mapping relationship, a plurality of calibration points need to be calibrated, to implement complete mapping of the spatial coordinate systems.

Because spatial calibration needs to be implemented manually, and a mapping relationship perceived subjectively by a human may be different from an actual mapping relationship, the actual mapping relationship may not be factually reflected. In a cylinder, calibration points that are distinct from each other cannot be found. Calibration points calibrated in different pictures, for example, the calibration point 4 and the calibration point 4' shown in FIG. 1b, cannot actually reflect a same point, resulting in a calibration error. Other than the cylinder, any other object with no distinct points, such as a sphere, is prone to the foregoing calibration error. Therefore, a manually calibrated mapping relationship may not be accurate. When spatial calibration is inaccurate, in a procedure of fusing the detection information from the plurality of sensors, one target object in reality may be determined as different target objects, or different target objects may be determined as one target object. In this way, information obtained through fusion is incorrect data.

In this embodiment of this application, spatial calibration is performed on the pictures detected by two cameras as shown in FIG. 1b. Spatial calibration may also be performed on a plurality of types of sensors. For example, calibration is performed on a picture detected by a camera and a picture detected by a radar. For calibration on pictures detected by different types of sensors, as described above, a calibration point may also fail to be correctly calibrated. Details are not described herein.

In addition, efficiency of manual calibration is low. In spatial calibration, manual calibration needs to be performed on a plurality of calibration points, and in a calibration procedure, a region being detected is not available. This limits an actual operation. For example, if spatial calibration needs to be performed on a vehicle lane, the vehicle lane, is unavailable for half a day or one day during manual calibration. Generally, for vehicle lane, scheduling, it is not allowed to occupy the vehicle lane, for such long time. In this case, spatial calibration and fusion of the detection information cannot be implemented.

In conclusion, alignment of the time axes of different sensors is currently limited by the time synchronization system, and cannot be implemented when the sensors are not in a same time synchronization system. Currently, alignment of the spatial coordinate systems of different sensors is limited by low efficiency and low accuracy of manual calibration. As a result, an error occurs in fusion of the detection information, and a scenario in which fusion may be implemented is limited.

Based on the foregoing disadvantage, an embodiment of this application provides an information processing method. Detection information is obtained from a plurality of sensors, so that formation information of objects displayed by using the detection information is obtained. Matching is performed on target formation information having similar features, to determine that the target formation information is detection information that is of a same object set and that is obtained by different sensors. Therefore, the detection information from different sensors is fused.

The method according to this embodiment of this application is actually a reproduction of a process on a device in which a same target object is manually determined in pictures detected by different sensors. Each sensor has a plurality of pictures corresponding to a plurality of time points, and information such as a quantity and a status of target objects reflected in each picture is not exactly the same. When dealing with so much information, human eyes cannot directly capture all details in the pictures, and can only first distinguish a picture of the same target object set from different pictures as a whole. For the same target object set, a plurality of pictures are determined from different pictures. This procedure is also referred to as matching of the target object set.

To perform matching on the target object set through human eyes, an abstract procedure is required. Only a position relationship between target objects in the picture is extracted, with other details in the picture being omitted. Therefore, the formation information of the target objects is abstracted from the picture.

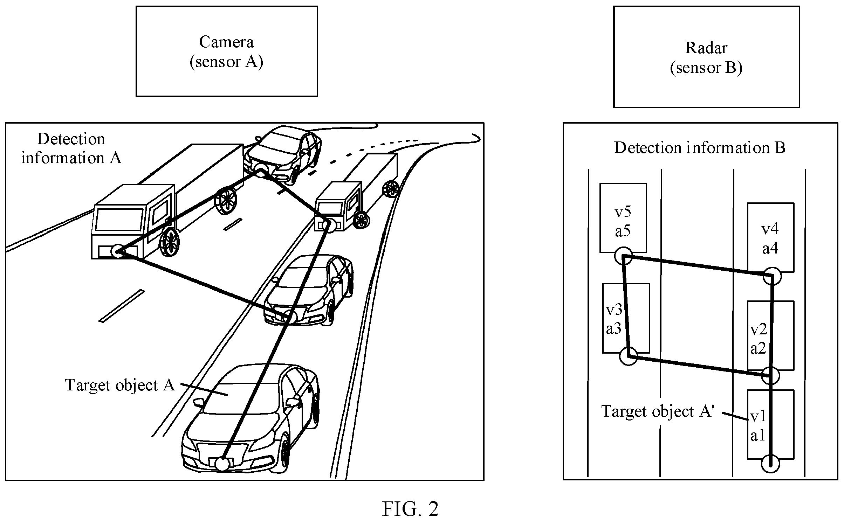

To describe a procedure of abstracting the formation information out more clearly, the following provides description with reference to FIG. 2. FIG. 2 is a schematic diagram of matching target objects according to an embodiment of this application. As shown in FIG. 2, in a picture detected by a camera, that is, detection information A, five motor vehicles form a shape similar to a number "9". In a picture detected by a radar, that is, detection information B, five target objects also form a shape similar to "9". In this case, it may be considered that in the two pictures, respective sets of the five target objects have similar position features, that is, have similar formation information. It may be considered that the two pictures reflect the same target object set in the pictures detected by different sensors.

The target object set is obtained through matching. Then, in the pictures detected by different sensors, a same single target object may be determined, based on a position of the single target object in the target object set, in the pictures detected by different sensors.

As shown in FIG. 2, in the detection information A detected a sensor A, a target object at the bottom of the formation "9" is a target object A. In this case, it may be considered that in the detection information B detected by a sensor B, a target object A' at the bottom of the formation "9" and the target object A are a same target object.

For example, the sensor A may be a camera, and the sensor B may be a radar. In addition to the foregoing combination, the sensor A and the sensor B may be another combination. For example, the sensor A is a radar, and the sensor B is an ETC sensor, or the sensor A and the sensor B are sensors of a same type, for example, radars or cameras. This is not limited herein.

In this embodiment of this application, a quantity of sensors is not limited. In addition to the sensor A and the sensor B, more sensors may be used to obtain more detection information, and a same target object in the detection information is analyzed. This is not limited herein.

The foregoing describes how a human determines the pictures of the same target object in pictures detected by different sensors. The solution in this embodiment of the present invention relates to applying the foregoing idea to a device. Specifically, the solution in this embodiment of the present invention mainly includes the following steps: 1: Obtain a plurality of pieces of detection information from different sensors. 2: Determine corresponding formation information based on the plurality of pieces of detection information. 3: Determine, based on the plurality of pieces of formation information, target formation information having similar features. 4: Fuse, based on formation position information of target objects in the target formation information, detection information of a same target object from different sensors.

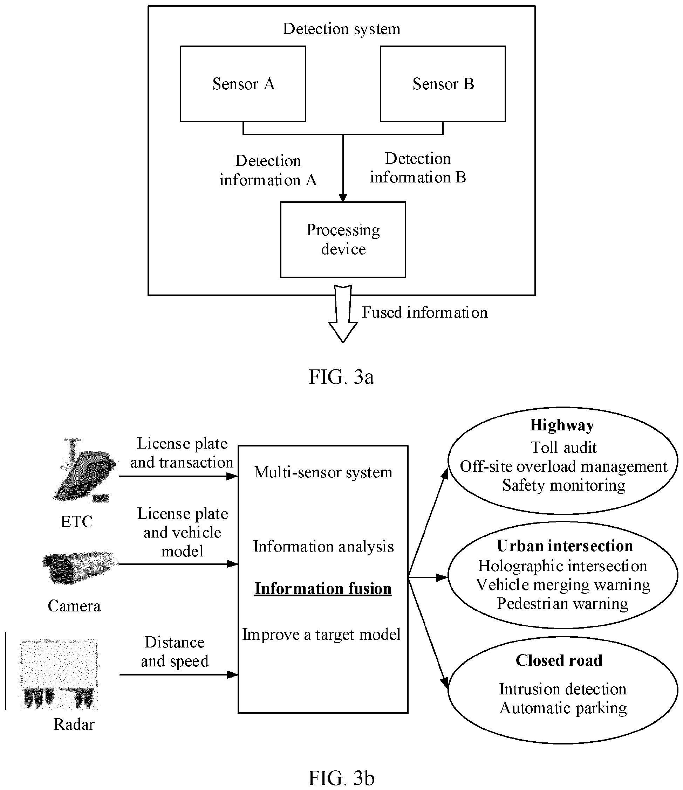

FIG. 3a is a schematic diagram of a system of an information processing method according to an embodiment of this application. As shown in FIG. 3a, the system is a detection system, and the system includes a processing device and a plurality of sensors. A sensor A and a sensor B are used as an example. The sensor A transmits detected detection information A to the processing device, and the sensor B transmits detected detection information B to the processing device. The processing device obtains fused information of a target object based on the detection information A and the detection information B.

It should be noted that devices in the detection system in this application may have a fixed connection state, or may not have a fixed connection state. Data transmission is implemented in a form of data replication and the like. The sensors and the processing device may be referred to as a detection system provided that the detection information from the sensors may be transmitted to the processing device. This is not limited herein. For example, the sensor A and the sensor B may separately obtain the detection information, and then copy the detection information A and the detection information B to the processing device within a specific period of time. The processing device processes the detection information A and the detection information B. This mode may also be referred to as offline processing.

It should be noted that only two sensors are used as an example in the figure. This does not constitute a limitation to a quantity of sensors in this embodiment of this application and in the detection system.

FIG. 3b is a schematic diagram of an application scenario of an information processing method according to an embodiment of this application. As shown in FIG. 3b, the information processing method according to this embodiment of this application is mainly used for information fusion in a multi-sensor system. The multi-sensor system may receive detection information from a plurality of sensors, and fuse the detection information from the plurality of sensors. The detection information may be a license plate obtained by using an electronic toll collection system (electronic toll collection, ETC) sensor, transaction information, and the like. In addition to the foregoing information from the ETC sensor, the multi-sensor system may further obtain other detection information from another sensor, such as a license plate and vehicle model information from a camera, and distance and speed information from a radar. This is not limited herein.

Fusion of the detection information is implemented by using the information processing method according to this embodiment of this application. A fusion result may be applied to a plurality of scenarios, such as toll audit, off-site overload management, and safety monitoring on a highway. In addition to the foregoing highway scenarios, the fusion result may be further applied to other scenarios, for example, a holographic intersection, a vehicle merging warning, a pedestrian warning on an urban intersection, or intrusion detection or automatic parking on a closed road. This is not limited herein.

### 1. Information processing method according to an embodiment of this application

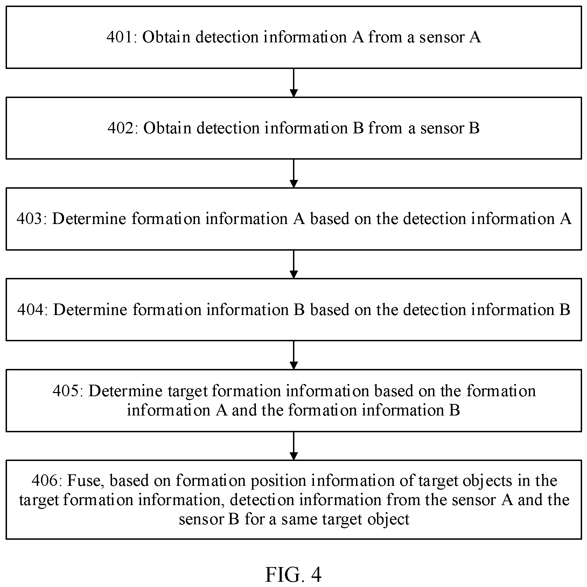

Based on the detection system shown in FIG. 3a, the following describes steps of the information processing method shown in this embodiment of this application in detail with reference to FIG. 4. FIG. 4 is a schematic flowchart of an information processing method according to an embodiment of this application. The method includes the following steps.

401: Obtain the detection information A from the sensor A.

Optionally, the detection information A obtained by the sensor A may include a position feature set. The position feature set includes a plurality of position features, and the position features indicate a position relationship between an object detected by the sensor A and an object around the object. For example, when the sensor A is a camera, the detection information is a picture including pixels, and the position feature may be a distance between the pixels. The position feature may also be represented in another form other than in the distance between the pixels, such as a left-right relationship or a front-rear relationship between the pixels. This is not limited herein.

In this embodiment of this application, the sensor A may be a sensor of another type other than the camera, for example, a radar or an electronic toll collection (electronic toll collection, ETC) system sensor. This is not limited herein. Sensors of different types provide corresponding position features. For example, a position feature detected by a radar may be represented as a distance between objects, a direction between the objects, or the like. A position feature detected by the ETC sensor may be represented as lane information of a vehicle, a time sequence relationship, or the like. This is not limited herein.

402: Obtain the detection information B from the sensor B.

Optionally, the detection information B obtained by the sensor B may also include a position feature set. For description of the sensor B, the detection information B, and the position features, refer to description of the sensor A, the detection information A, and the position features in step 401. Details are not described herein again.

It should be noted that in this embodiment of this application, the sensor A and the sensor B may be sensors of a same type, or may be sensors of different types. For example, the sensor A and the sensor B may be cameras at different angles or may be different radars. Alternatively, the sensor A may be a camera or a radar, and the sensor B may be an ETC sensor. This is not limited herein.

It should be noted that a quantity of sensors in this embodiment of this application is not limited to two, and the quantity of the sensors may be any integer greater than or equal to 2. This is not limited herein. The sensor A and the sensor B are used as examples of sensors in the monitoring system. If the detection system includes more sensors, for description of these sensors, refer to description of the sensor A in step 401 and the sensor B in step 402. Details are not described herein again. Types of the plurality of sensors are not limited. The sensors may be sensors of a same type, or may be sensors of different types. This is not limited herein.

403: Determine formation information Abased on the detection information A.

After the detection information A is obtained, the processing device may determine the formation information A based on the detection information A, where the formation information A indicates a position relationship between objects detected by the sensor A.

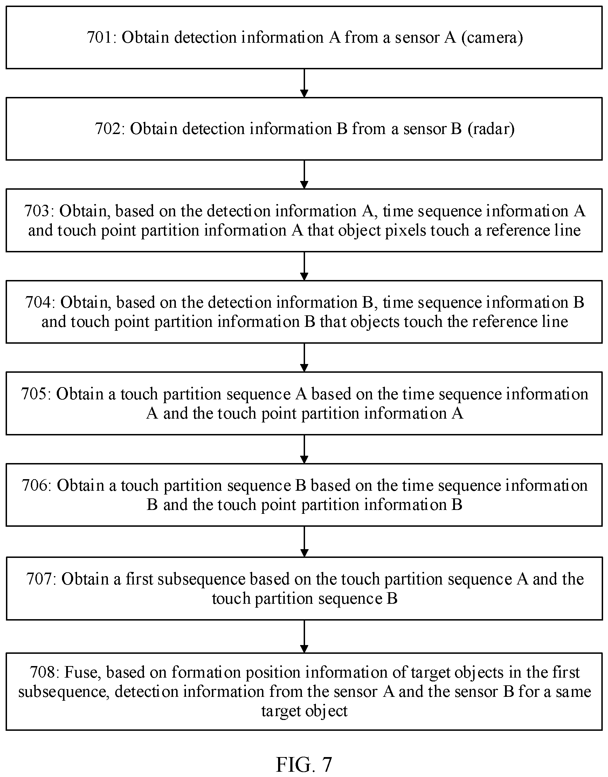

Optionally, if the detection information A includes the position feature set, the processing device may determine the formation information Abased on the position feature set. Specifically, there are a plurality of methods for obtaining the formation information A based on the position feature set, and the obtained formation information A is different. To describe the different methods for obtaining the formation information A more clearly, the methods will be described by category in the following embodiments. For a specific procedure, refer to embodiments shown in FIG. 7 to FIG. 17. Details are not described herein again.

404: Determine formation information B based on the detection information B.

After the detection information B is obtained, the processing device may determine the formation information B based on the detection information B, where the formation information B indicates a position relationship between objects detected by the sensor B. Specifically, the position relationship between the objects may include at least one of a left-right position relationship between the objects or a front-rear position relationship between the objects.

Optionally, if the detection information B includes the position feature set, the processing device may determine the formation information B based on the position feature set. Specifically, the formation information may be determined by using a method such as a line drawing method or an image feature-matching method. For a procedure of obtaining the formation information B, refer to the procedure of obtaining the formation information A in step 403. Details are not described herein again.

In this embodiment of this application, there is no necessary sequence between step 401 and step 402. To be specific, step 401 may be performed before or after step 402, or step 401 and step 402 may be performed simultaneously. This is not limited herein. There is no necessary sequence between step 403 and step 404. To be specific, step 403 may be performed before or after step 404, or step 403 and step 404 may be performed simultaneously, provided that step 403 is performed after step 401, and step 404 is performed after step 402. This is not limited herein.

In this embodiment of this application, if detection information from more sensors is obtained, corresponding formation information also needs to be determined based on the obtained detection information. For a procedure of determining the corresponding formation information, refer to description of step 403 and step 404. Details are not described herein again.

405: Determine target formation information based on the formation information A and the formation information B.

After the formation information A and the formation information B are obtained, the target formation information may be determined based on the formation information A and the formation information B. Both a matching degree between the target formation information and the formation information A and a matching degree between the target formation information and the formation information B are greater than a preset threshold. The target formation information represents formation information that is in the formation information A and in the formation information B and that relates to a same target object set.

In this embodiment of this application, the formation information may be represented in a plurality of forms, and standards for determining the matching degree are not exactly the same. To describe obtaining procedures and processing manners of different formation information more clearly, detailed explanations are provided subsequently with reference to embodiments in FIG. 7 to FIG. 17. Details are not described herein again.

406: Fuse, based on formation position information of target objects in the target formation information, detection information from the sensor A and the sensor B for a same target object.

The formation information includes formation position information of target objects, and indicates specific positions of the target objects in the target object set. Therefore, targets that correspond to the same target object and that are in the detection information from different sensors may be determined based on the formation position information of the target objects, and detection information of a plurality of corresponding targets is fused.

In this embodiment of this application, the formation information of the objects detected by the sensors is separately determined based on the detection information from different sensors. The target formation information is determined based on the matching degree between the target formation information and each piece of formation information, so that the target object is determined. Because the target formation information is formation information that is detected by different sensors and that has similar features, and reflects information that is detected by different sensors and that is of the same target object, a correspondence, reflected in the target formation information, between detection results that are of any object and that are obtained by different sensors may be determined based on the target formation information. The detection results that are of the same object and that are obtained by different sensors may be fused based on the correspondence. Compared with a manual calibration method, the method used in this embodiment of this application obtains fused detection information based on the formation information, and greatly improves efficiency of obtaining the fused detection information.

In addition, in terms of information collection, the method in this embodiment of this application requires only the detection information from different sensors, without occupying any of a measured field. Therefore, applicability of fusion of the detection information is expanded.

Optionally, in step 403 and step 404, the corresponding formation information may be determined based on the position feature set. In step 405, the target formation information needs to be determined based on a plurality of pieces of the formation information. In this embodiment of this application, the position feature set has different forms, and there are many manners of determining the formation information, mainly including the line drawing method and the image feature-matching method. The following describes the methods by category.

In this embodiment of this application, the formation information may include three types of information: 1: A horizontal relative position relationship between objects, for example, a left-right position relationship or a left-right distance between objects. 2: A vertical relative position relationship between objects, for example, a front-rear position relationship or a front-rear distance between objects. 3: A feature of the object, such as the length, width, height, and shape.

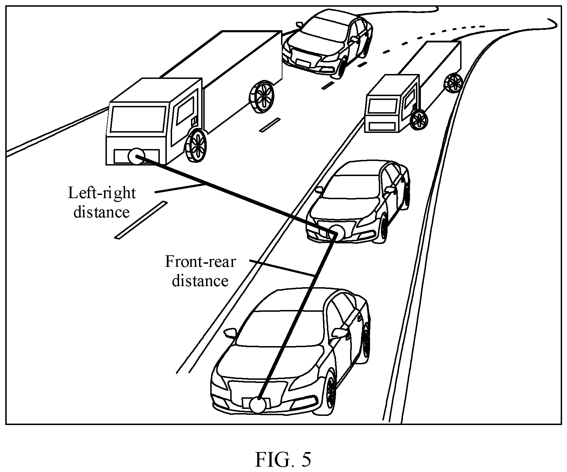

FIG. 5 is a schematic diagram of features of an information processing method according to an embodiment of this application. As shown in FIG. 5, formation information may include a front-rear distance and a left-to-right distance between vehicles, and may further include information of each vehicle, for example, information such as a vehicle model and a license plate number. This is not limited herein.

It should be noted that, in FIG. 5, only vehicles on a road are used as an example. This does not constitute a limitation to an object detected by a sensor. The sensor may be further configured to detect another object, for example, a pedestrian or an obstacle. This is not limited herein.

### 1: Line drawing method

For a human, the formation information may be represented as a complete shape, for example, the shape "9" in the embodiment shown in FIG. 2. For a device, efficiency of processing a shape or an image is not as high as that of processing a number. Data processing efficiency can be greatly improved by presenting the formation information in the form of consecutive or discrete numbers.

The complete shape feature can be converted into a number feature by using the line drawing method. In pictures detected by different sensors, reference lines are drawn. Information, such as a time sequence and positions, that objects touch the reference line is obtained, so that a shape feature may be converted into a number feature, thereby facilitating calculation processing of a processing device.

In this embodiment of this application, information that the objects touch the reference line is also referred to as line touch information. The line touch information may include time sequence information, touch point partition information, touch point position information, touch time interval information, and the like that the objects touch the reference line. This is not limited herein.

The time sequence information indicates a time sequence in which the objects detected by the sensors touch the reference line, and reflects a front-rear relationship between the objects.

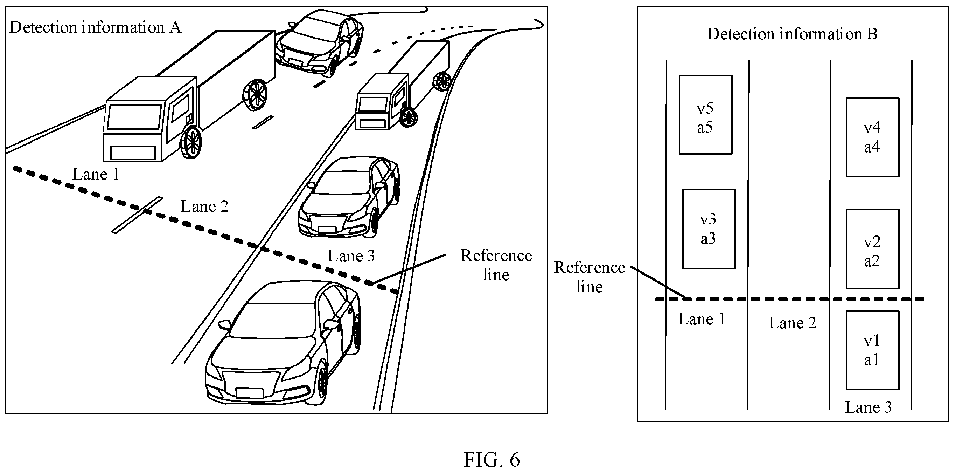

The touch point partition information indicates partition information of touch points that are on the reference line and at which the objects touch the reference line. FIG. 6 is a schematic diagram of a line drawing method according to an embodiment of this application. On a roadway, the reference line may be divided into partitions based on different lanes. For example, in the figure, a lane 1 is a partition 1, a lane 2 is a partition 2, and a lane 3 is a partition 3.

The touch point position information indicates position information of touch points that are on the reference line and at which the objects touch the reference line. For example, in FIG. 6, a first vehicle in the lane 1 is 1.5 meters away from a left endpoint of the reference line, and a first vehicle on the lane 3 is 7.5 meters away from the left endpoint of the reference line.

The touch time interval information indicates a time interval at which the objects touch the reference line.

In the three types of formation information, the touch point partition information and the touch point position information may be classified into the horizontal relative position relationship between the objects, and the time sequence information and the touch time interval information may be classified into the vertical relative position relationship between the objects.

There are a plurality of methods for obtaining target formation information based on the foregoing information. The following describes the methods by category.
(1) Determine a first subsequence based on the time sequence information and the touch point partition information.

FIG. 7 is a schematic flowchart of an information processing method according to an embodiment of this application. The method includes the following steps.

701: Obtain detection information A from a sensor A (camera).

The camera is used as an example. When the sensor A is the camera, the detection information is a picture including pixels, and a position feature in a position feature set may be a distance between pixels. The position feature may also be represented in another form other than in the distance between the pixels, such as a left-right relationship or a front-rear relationship between the pixels. This is not limited herein.

In this embodiment of this application, the sensor A may be a sensor of another type other than the camera, for example, a radar or an ETC sensor. This is not limited herein. Sensors of different types provide corresponding position features. For example, a position feature detected by a radar may be represented as a distance between objects, a direction between the objects, or the like. A position feature detected by the ETC sensor may be represented as lane information of a vehicle, a time sequence relationship, or the like. This is not limited herein.

702: Obtain detection information B from a sensor B (radar).

The radar is used as an example. When the sensor B is the radar, the detection information is a picture of objects detected by the radar in a detection range, and a position feature in a position feature set may be a distance between the objects. The position feature may also be represented in another form other than in the distance between the objects, such as a left-right relationship or a front-rear relationship between the objects. This is not limited herein.

In this embodiment of this application, the sensor B may be a sensor of another type other than the radar, for example, a camera or an ETC sensor. This is not limited herein. Sensors of different types provide corresponding position features. This is not limited herein.

In this embodiment of this application, the sensor A and the sensor B are merely examples of the sensors. This does not constitute a limitation to types and a quantity of sensors.

703: Obtain, based on the detection information A, time sequence information A and touch point partition information A that object pixels touch a reference line.

The detection information A is the picture including the pixels, and the line touch information is information that the object pixels touch the reference line. Therefore, the processing device may obtain, based on the detection information A, the time sequence information A, and the touch point partition information A that the object pixels touch the reference line.

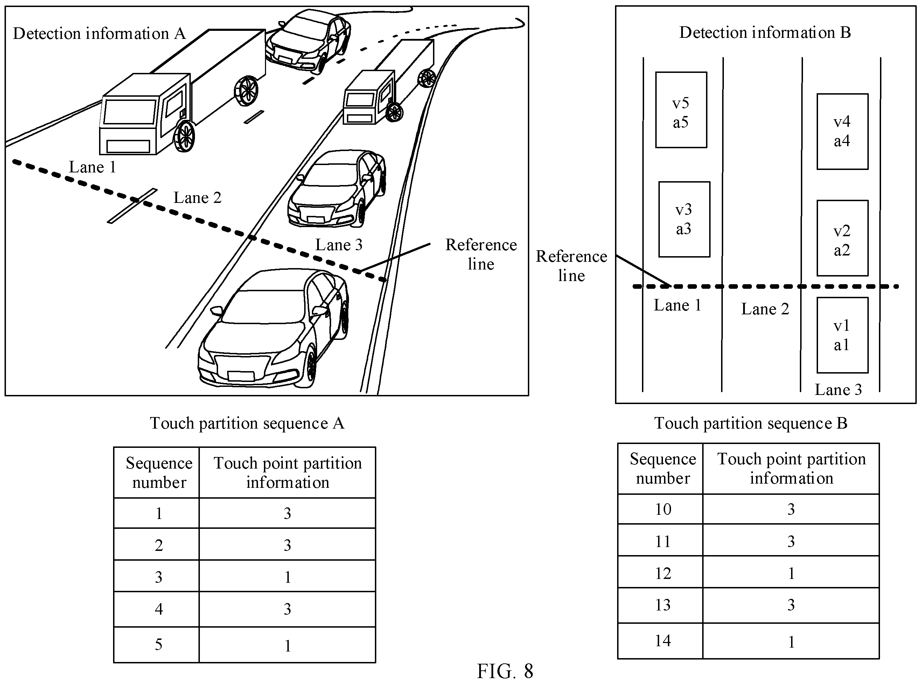

FIG. 8 is a schematic diagram of an application scenario of an information processing method according to an embodiment of this application. As shown in FIG. 8, a column of sequence numbers indicates a sequence in which the objects touch the reference line, namely, the time sequence information A. A column of touch point partition information indicates partition information of the touch points that are on the reference line and at which the objects touch the reference line, namely, the touch point partition information A, where 1 indicates the lane 1, and 3 indicates the lane 3.

704: Obtain, based on the detection information B, time sequence information B and touch point partition information B that the objects touch the reference line.

The detection information B is a picture of objects detected by the radar in a detection range, and the line touch information is information that the objects touch the reference line. Therefore, the processing device may obtain, based on the detection information B, the time sequence information B, and the touch point partition information B that the objects touch the reference line. As shown in FIG. 8, a column of sequence numbers indicates a sequence in which the objects touch the reference line, namely, the time sequence information B. A column of touch point partition information indicates partition information of the touch points that are on the reference line and at which the objects touch the reference line, namely, the touch point partition information B, where 1 indicates the lane 1, and 3 indicates the lane 3.

In this embodiment of this application, there is no necessary sequence between step 701 and step 702. Step 701 may be performed before or after step 702, or step 701 and step 702 may be performed simultaneously. This is not limited herein. There is no necessary sequence between step 703 and step 704. Step 703 may be performed before or after step 704, or step 703 and step 704 may be performed simultaneously, provided that step 703 is performed after step 701, and step 704 is performed after step 702. This is not limited herein.

705: Obtain a touch partition sequence A based on the time sequence information A and the touch point partition information A.

As shown in FIG. 8, based on the time sequence information A, the touch point partition information A may be arranged based on a time sequence, to obtain the touch partition sequence A.

706: Obtain a touch partition sequence B based on the time sequence information B and the touch point partition information B.

As shown in FIG. 8, based on the time sequence information B, the touch point partition information B may be arranged based on a time sequence, to obtain the touch partition sequence B.

In this embodiment of this application, there is no necessary sequence between step 705 and step 706. Step 705 may be performed before or after step 706, or step 705 and step 706 may be performed simultaneously, provided that step 705 is performed after step 703 and step 706 is performed after step 704. This is not limited herein.

707: Obtain a first subsequence based on the touch partition sequence A and the touch partition sequence B.

The touch partition sequence A and the touch partition sequence B are essentially two number sequences. The processing device may compare the two number sequences. When finding that the two number sequences include sequence segments that are the same or have a high matching degree, the processing device may consider that the sequence segment is a common part of the two sequences. In this embodiment of this application, the sequence segment is also referred to as the first subsequence. The touch partition sequence reflects a position relationship between the objects detected by the sensor, namely, the formation information between the objects. Therefore, when the two number sequences include the sequence segments that are the same or have the high matching degree, it indicates that object sets corresponding to the segments in the two number sequences have a same position relationship, that is, have same formation information. If different sensors detect same or similar formation information, it may be considered that the two sensors detect a same object set.

In this embodiment of this application, the first subsequence is also referred to as target formation information, and represents same or similar formation information detected by the plurality of sensors.

Specifically, because the sensor has a specific miss detection rate, it is not required that the first subsequence completely matches the segments in the touch partition sequence A and the touch partition sequence B, provided that a matching degree between the first subsequence and the touch partition sequence A and a matching degree between the first subsequence and the touch partition sequence B are both greater than a first threshold. In this embodiment of this application, the matching degree is also referred to as similarity. Specifically, the first threshold may be 90%. The first threshold may be another value other than 90%, for example, 95% or 99%. This is not limited herein.

For example, both the touch partition sequence A and the touch partition sequence B shown in FIG. 8 include a sequence segment (3, 3, 1, 3, 1). The processing device may use the segment as the first subsequence. In this case, both a matching degree between the first subsequence and the touch partition sequence A and a matching degree between the first subsequence and the touch partition sequence B are 100%.

Optionally, the first subsequence may be determined by using an LCS algorithm. In this embodiment of this application, all common sequences of the plurality of touch partition sequences may be obtained by using the LCS algorithm, to implement matching of same position features in the plurality of touch partition sequences. Because a longest common subsequence is calculated by using the LCS algorithm, the first subsequence calculated by using the LCS algorithm may include a longest subsequence in subsequences whose matching degrees with the foregoing plurality of touch partition sequences are greater than the first threshold.

In this embodiment of this application, all the common sequences of the plurality of touch partition sequences may be determined by using the LCS algorithm, to obtain, through matching, all segments that are of the touch partition sequences and that have the same position features. If a plurality of segments are the common sequences, and some non-common sequences are included in the common sequences, the non-common sequences included in the common sequences may be identified. The non-common sequences reflect different position relationships in different sensors. In this case, it may be considered that the non-common sequences are included in the common sequences due to false detection or missing detection of the sensors. Therefore, fault tolerance is performed on the non-common sequences, that is, the non-common sequences are allowed to correspond to the target objects detected by different sensors, to implement fusion of the detection information.

In this embodiment of this application, the first subsequence determined by using the LCS algorithm may include the longest subsequence in subsequences whose matching degrees with the foregoing plurality of touch partition sequences are greater than the first threshold. Position relationships between the target objects may be occasionally similar. Therefore, a longer length of the determined subsequence indicates a lower possibility of having similar position relationships, and as a result, a contingency may be more easily avoided. The longest subsequence is determined by using the LCS algorithm, so that target formation information of the same target object set may be accurately determined.

For example, position relationships between two target objects may be occasionally similar. However, if a standard is improved to that position relationships of ten target objects have a high matching degree, a possibility that the ten target objects have similar position relationships is greatly lower than a possibility that the two target objects have similar position relationships. Therefore, if a first subsequence of the ten target objects is determined by using the LCS algorithm, a possibility that the ten target objects are same ten target objects that correspond to detection results obtained by different sensors is higher, and a possibility of a mismatch is reduced.

708: Fuse, based on formation position information of target objects in the first subsequence, detection information from the sensor A and the sensor B for a same target object.

The first subsequence includes a plurality of pieces of touch point partition information. Data corresponding to each piece of touch point partition information in the first subsequence may be found in the touch partition sequence A and the touch partition sequence B. For example, for touch point partition information with a sequence number 4 in the touch partition sequence A, touch point partition information of a target obj ect is 3, and touch point partition information of another target object before/after the target object is 1.

In this embodiment of this application, a single piece of touch point partition information in the touch partition sequence or the first subsequence is also referred to as the formation position information, indicating a position of a single target object in the target object set.

In this embodiment of this application, the partition information of the target object is referred to as a feature of the target object, and partition information of the another target object before/after or near the target object is referred to as a surrounding feature. The surrounding feature may also include touch point partition information of more nearby target objects other than the touch point partition information of the another target object before/after the target object. This is not limited herein.

In the touch partition sequence B, touch point partition information with a same feature of a target object and a same surrounding feature may be found, namely, touch point partition information with a sequence number 13. The two pieces of touch point partition information are in the first subsequence and have the same feature of the target object and the same surrounding feature, it may be considered that the two pieces of touch point partition information reflect a same object. Therefore, the processing device may fuse detection information corresponding to the sequence number 4 and detection information corresponding to the sequence number 13, to obtain fused information of the target object.

For example, a camera corresponding to the touch partition sequence A may detect appearance information such as a size and a shape of an object corresponding to the sequence number 4. For a vehicle, information such as a model, a color, and a license plate of a vehicle corresponding to the sequence number 4 may be detected. A radar corresponding to the touch partition sequence B may detect information such as a moving speed of an object corresponding to the sequence number 13. For a vehicle, information such as a speed and an acceleration of a vehicle corresponding to the sequence number 13 may be detected. The processing device may fuse the foregoing information such as the model, the color, and the license plate with the information such as the speed and the acceleration of the vehicle, to obtain fused information of the vehicle.

In this embodiment of this application, the time sequence information indicates a time sequence that the different target objects touch the reference line, and the touch point partition information indicates a left-right relationship that the different target objects touch the reference line. A relationship of positions at which the plurality of target objects touch the reference line is reflected in the touch partition sequence by using the time sequence information indicating the time sequence and the touch point partition information indicating the left-right relationship. Because both the time sequence information and the touch point partition information are specific values, the touch partition sequence is a set of values reflecting a position relationship between the target objects. Corresponding touch partition sequences are obtained based on the detection information from different sensors. The plurality of obtained touch partition sequences are a plurality of value sets. To determine that a matching degree between the value sets meets a preset threshold, it requires only comparison between corresponding values, without complex operations. Therefore, efficiency of performing matching to determine the target formation information is improved.

In this embodiment of this application, the target formation information is determined based on the time sequence information and the touch point partition information. Alternatively, the target formation information may be further determined based on the time sequence information and the touch time interval information.

(2) Determine a second subsequence based on the time sequence information and the touch time interval information.

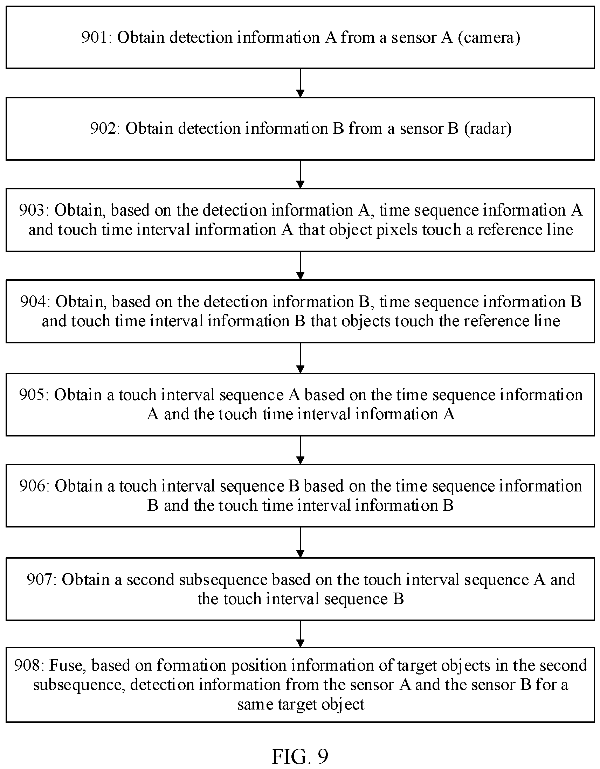

FIG. 9 is a schematic flowchart of an information processing method according to an embodiment of this application. The method includes the following steps.

901: Obtain detection information A from a sensor A (camera).

902: Obtain detection information B from a sensor B (radar).

For description of step 901 and step 902, refer to step 701 and step 702 in the embodiment shown in FIG. 7. Details are not described herein again.

903: Obtain, based on the detection information A, time sequence information A and touch time interval information A that object pixels touch a reference line.

The detection information A is the picture including the pixels, and the line touch information is information that the object pixels touch the reference line. Therefore, the processing device may obtain, based on the detection information A, the time sequence information A, and the touch time interval information A that the object pixels touch the reference line.

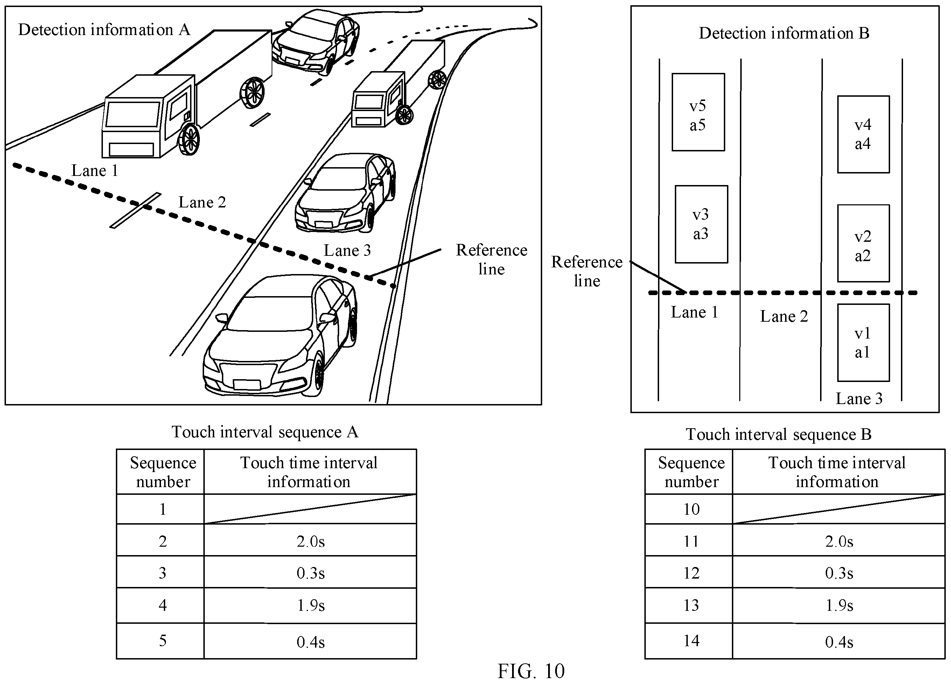

FIG. 10 is a schematic diagram of an application scenario of an information processing method according to an embodiment of this application. As shown in FIG. 10, a column of sequence numbers indicates a sequence in which the objects touch the reference line, namely, the time sequence information A. A column of touch time interval information indicates a difference between time at which an object touches the reference line and time at which a previous object touches the reference line, namely, the touch time interval information A, where the touch time interval information is in a unit of seconds. The touch time interval information may also be in a unit of milliseconds other than in the unit of seconds. This is not limited herein.

904: Obtain, based on the detection information B, time sequence information B and touch time interval information B that the objects touch the reference line.

The detection information B is a picture of objects detected by the radar in a detection range, and the line touch information is information that the objects touch the reference line. Therefore, the processing device may obtain, based on the detection information B, the time sequence information B, and the touch time interval information B that the objects touch the reference line.

As shown in FIG. 10, a column of sequence numbers indicates a sequence in which the objects touch the reference line, namely, the time sequence information B. A column of touch time interval information indicates a difference between time at which an object touches the reference line and time at which a previous object touches the reference line, namely, the touch time interval information B, where the touch time interval information is in a unit of seconds. The touch time interval information may also be in a unit of milliseconds other than in the unit of seconds. This is not limited herein.

In this embodiment of this application, there is no necessary sequence between step 901 and step 902. Step 901 may be performed before or after step 902, or step 901 and step 902 may be performed simultaneously. This is not limited herein. There is no necessary sequence between step 903 and step 904. Step 903 may be performed before or after step 904, and step 903 and step 904 may be performed simultaneously, provided that step 903 is performed after step 901, and step 904 is performed after step 902. This is not limited herein.

905: Obtain a touch interval sequence A based on the time sequence information A and the touch time interval information A.

As shown in FIG. 10, based on the time sequence information A, the touch time interval information A may be arranged based on a time sequence, to obtain the touch interval sequence A.

906: Obtain a touch interval sequence B based on the time sequence information B and the touch time interval information B.

As shown in FIG. 10, based on the time sequence information B, the touch time interval information B may be arranged based on a time sequence, to obtain the touch interval sequence B.

In this embodiment of this application, there is no necessary sequence between step 905 and step 906. Step 905 may be performed before or after step 906, or step 905 and step 906 may be performed simultaneously, provided that step 905 is performed after step 903 and step 906 is performed after step 904. This is not limited herein.

907: Obtain a second subsequence based on the touch interval sequence A and the touch interval sequence B.

The touch interval sequence A and the touch interval sequence B are essentially two number sequences. The processing device may compare the two number sequences. When finding that the two number sequences include sequence segments that are the same or have a high matching degree, the processing device may consider that the sequence segment is a common part of the two sequences. In this embodiment of this application, the sequence segment is also referred to as the second subsequence. The touch interval sequence reflects a position relationship between the objects detected by the sensor, namely, the formation information between the objects. Therefore, when the two number sequences include the sequence segments that are the same or have the high matching degree, it indicates that object sets corresponding to the segments in the two number sequences have a same position relationship, that is, have same formation information. If different sensors detect same or similar formation information, it may be considered that the two sensors detect a same object set.

In this embodiment of this application, the second subsequence is also referred to as target formation information, and represents same or similar formation information detected by the plurality of sensors.

Specifically, because the sensor has a specific miss detection rate, it is not required that the second subsequence completely matches the segments in the touch interval sequence A and the touch interval sequence B, provided that a matching degree between the second subsequence and the touch interval sequence A and a matching degree between the second subsequence and the touch interval sequence B are both greater than a second threshold. In this embodiment of this application, the matching degree is also referred to as similarity. Specifically, the second threshold may be 90%. The second threshold may be another value other than 90%, for example, 95% or 99%. This is not limited herein.

For example, both the touch interval sequence A and the touch interval sequence B shown in FIG. 10 include a sequence segment (2.0s, 0.3 s, 1.9s, 0.4s). The processing device may use the segment as the second subsequence. In this case, both a matching degree between the second subsequence and the touch interval sequence A and a matching degree between the second subsequence and the touch interval sequence B are 100%.

Optionally, the second subsequence may be determined by using the LCS algorithm. In this embodiment of this application, all common sequences of the plurality of touch interval sequences may be obtained by using the LCS algorithm, to implement matching of same position features in the plurality of touch interval sequences. Because a longest common subsequence is calculated by using the LCS algorithm, the second subsequence calculated by using the LCS algorithm may include a longest subsequence in subsequences whose matching degrees with the foregoing plurality of touch interval sequences are greater than the second threshold.

In this embodiment of this application, all the common sequences of the plurality of touch interval sequences may be determined by using the LCS algorithm, to obtain, through matching, all segments that are of the touch interval sequences and that have the same position feature. If a plurality of segments are the common sequences, and some non-common sequences are included in the common sequences, the non-common sequences included in the common sequences may be identified. The non-common sequences reflect different position relationships in different sensors. In this case, it may be considered that the non-common sequences are included in the common sequences due to false detection or missing detection of the sensors. Therefore, fault tolerance is performed on the non-common sequences, that is, the non-common sequences are allowed to correspond to the target objects detected by different sensors, to implement fusion of the detection information.

In this embodiment of this application, the second subsequence determined by using the LCS algorithm may include the longest subsequence in subsequences whose matching degrees with the plurality of touch interval sequences are greater than the second threshold. Position relationships between the target objects may be occasionally similar. Therefore, a longer length of the determined subsequence indicates a lower possibility of having similar position relationships, and as a result, a contingency may be more easily avoided. The longest subsequence is determined by using the LCS algorithm, so that target formation information of the same target object set may be accurately determined.

For example, position relationships between two target objects may be occasionally similar. However, if a standard is improved to that position relationships of ten target objects have a high matching degree, a possibility that the ten target objects have similar position relationships is greatly lower than a possibility that the two target objects have similar position relationships. Therefore, if a first subsequence of the ten target objects is determined by using the LCS algorithm, a possibility that the ten target objects are same ten target objects that correspond to detection results obtained by different sensors is higher, and a possibility of a mismatch is reduced.

908: Fuse, based on formation position information of target objects in the second subsequence, detection information from the sensor A and the sensor B for a same target object.

The second subsequence includes a plurality of pieces of touch time interval information. Data corresponding to each piece of touch time interval information in the second subsequence may be found in the touch interval sequence A and the touch interval sequence B. For example, for touch time interval information with a sequence number 3 in the touch interval sequence A, touch time interval information of a target object is 0.3 s, and touch time interval information of another target object before/after the target object is 2.0s and 1.9s.

In this embodiment of this application, a single piece of touch time interval information in the touch interval sequence or the second subsequence is also referred to as the formation position information, indicating a position of a single target object in the target object set.

In this embodiment of this application, the touch time interval information of the target object is referred to as a feature of the target object, and touch time interval information of the another target object before/after or near the target object is referred to as a surrounding feature. The surrounding feature may also include touch time interval information of more nearby target objects other than the touch time interval information of the another target object before/after the target object. This is not limited herein.

In the touch interval sequence B, touch time interval information with a same feature of a target object and a same surrounding feature may be found, namely, touch time interval information with a sequence number 12. The two pieces of touch time interval information are in the second subsequence and have the same feature of the target object and the same surrounding feature, it may be considered that the two pieces of touch time interval information reflect a same object. Therefore, the processing device may fuse detection information corresponding to the sequence number 3 and detection information corresponding to the sequence number 12, to obtain fused information of the target object.

For example, a camera corresponding to the touch partition sequence A may detect appearance information such as a size and a shape of an object corresponding to the sequence number 3. For a vehicle, information such as a model, a color, and a license plate of a vehicle corresponding to the sequence number 3 may be detected. A radar corresponding to the touch partition sequence B may detect information such as a moving speed of an object corresponding to the sequence number 12. For a vehicle, information such as a speed and an acceleration of a vehicle corresponding to the sequence number 12 may be detected. The processing device may fuse the foregoing information such as the model, the color, and the license plate with the information such as the speed and the acceleration of the vehicle, to obtain fused information of the vehicle.

In this embodiment of this application, the time sequence information indicates a time sequence that the different target objects touch the reference line, and the touch time interval information indicates a time interval at which the different target objects touch the reference line. A relationship of positions at which the plurality of target objects touch the reference line is reflected in the touch interval sequence by using the time sequence information indicating the time sequence and the touch time interval information indicating the time interval. Because both the time sequence information and the touch time interval information are specific values, the touch interval sequence is a set of values reflecting a position relationship between the target objects. Corresponding touch interval sequences are obtained based on the detection information from different sensors. The plurality of obtained touch interval sequences are a plurality of value sets. To determine that a matching degree between the value sets meets a preset threshold, it requires only comparison between corresponding values, without complex operations. Therefore, efficiency of performing matching to determine the target formation information is improved.

In this embodiment of this application, the target formation information is determined based on the foregoing two methods. Alternatively, the target formation information may be further determined based on the time sequence information and the touch point position information.

(3) Determine a third subsequence based on the time sequence information and the touch point position information.

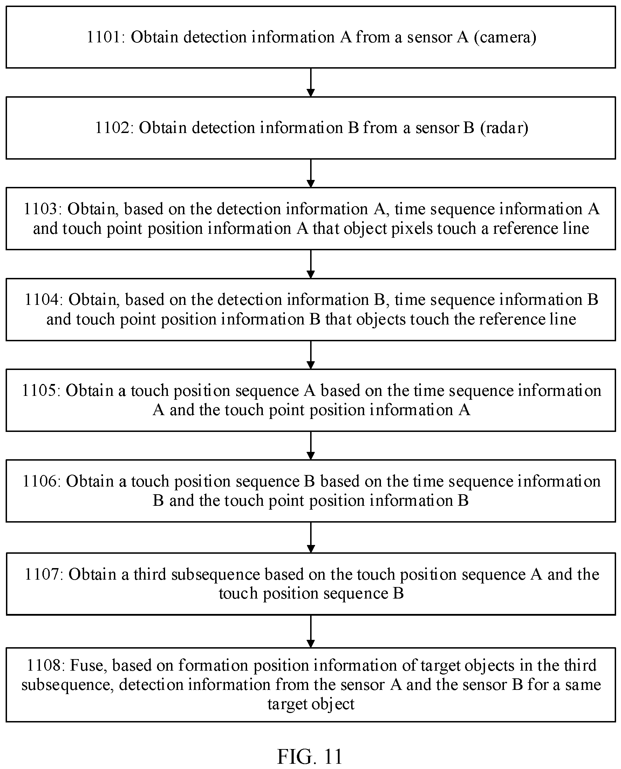

FIG. 11 is a schematic flowchart of an information processing method according to an embodiment of this application. The method includes the following steps.

1101: Obtain detection information A from a sensor A (camera).

1102: Obtain detection information B from a sensor B (radar).

For description of step 1101 and step 1102, refer to step 701 and step 702 in the embodiment shown in FIG. 7. Details are not described herein again.

1103: Obtain, based on the detection information A, time sequence information A and touch point position information A that object pixels touch a reference line.

The detection information A is the picture including the pixels, and the line touch information is information that the object pixels touch the reference line. Therefore, the processing device may obtain, based on the detection information A, the time sequence information A, and the touch point position information A that the object pixels touch the reference line. The touch point position information A indicates positions of touch points on the reference line. Specifically, the touch point position information A may indicate a position relationship between the touch points of different objects, and may specifically indicate a left-right relationship between the touch points, to reflect a left-right relationship between the objects.

Optionally, to reflect the left-right position relationship between the objects, the touch point position information A may indicate a distance between the touch point and a reference point on the reference line. The position relationship between the touch points is reflected through distances between different touch points and the reference point. In this embodiment of this application, a distance between the touch point and a left endpoint of the reference line is used as an example. This does not constitute a limitation to the touch point position information. The touch point position information may indicate a position relationship between the touch point and any point on the reference line. This is not limited herein.

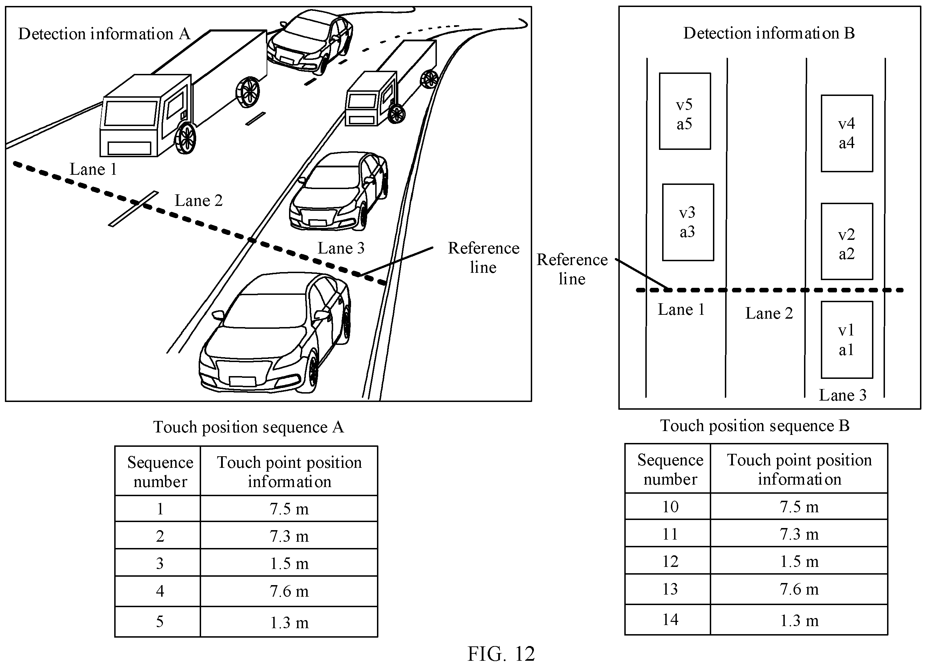

FIG. 12 is a schematic diagram of an application scenario of an information processing method according to an embodiment of this application. As shown in FIG. 12, a column of sequence numbers indicates a sequence in which the objects touch the reference line, namely, the time sequence information A. A column of touch point position information indicates a distance between the touch point at which the object touches the reference line and the left endpoint of the reference line, namely, the touch point position information A. In this embodiment of this application, the touch point position information may indicate a position relationship between the touch point and any point on the reference line. This is not limited herein.

1104: Obtain, based on the detection information B, time sequence information B and touch point position information B that the objects touch the reference line.

The detection information B is a picture of objects detected by the radar in a detection range, and the line touch information is information that the objects touch the reference line. Therefore, the processing device may obtain, based on the detection information B, the time sequence information B, and the touch point position information B that the objects touch the reference line. For description of the touch point position information B, refer to description of the touch point position information A in step 1103. Details are not described herein again.

Optionally, as shown in FIG. 12, a column of sequence numbers indicates a sequence in which the objects touch the reference line, namely, the time sequence information B. A column of touch time interval information indicates a distance between the touch point at which the object touches the reference line and the left endpoint of the reference line, namely, the touch point position information B. In this embodiment of this application, the touch point position information may indicate a position relationship between the touch point and any point on the reference line, to reflect a position relationship between different touch points. This is not limited herein.

In this embodiment of this application, there is no necessary sequence between step 1101 and step 1102. Step 1101 may be performed before or after step 1102, or step 1101 and step 1102 may be performed simultaneously. This is not limited herein. There is no necessary sequence between step 1103 and step 1104. Step 1103 may be performed before or after step 1104, or step 1103 and step 1104 may be performed simultaneously, provided that step 1103 is performed after step 1101, and step 1104 is performed after step 1102. This is not limited herein.

1105: Obtain a touch position sequence A based on the time sequence information A and the touch point position information A.

As shown in FIG. 12, based on the time sequence information A, the touch point position information A may be arranged based on a time sequence, to obtain the touch position sequence A.

1106: Obtain a touch position sequence B based on the time sequence information B and the touch point position information B.

As shown in FIG. 12, based on the time sequence information B, the touch point position information B may be arranged based on a time sequence, to obtain the touch position sequence B.

In this embodiment of this application, there is no necessary sequence between step 1105 and step 1106. Step 1105 may be performed before or after step 1106, or step 1105 and 1106 may be performed simultaneously, provided that step 1105 is performed after step 1103 and step 1106 is performed after step 1104. This is not limited herein.

1107: Obtain a third subsequence based on the touch position sequence A and the touch position sequence B.

The touch position sequence A and the touch position sequence B are essentially two number sequences. The processing device may compare the two number sequences. When finding that the two number sequences include sequence segments that are the same or have a high matching degree, the processing device may consider that the sequence segment is a common part of the two sequences. In this embodiment of this application, the sequence segment is also referred to as the third subsequence. The touch position sequence reflects a position relationship between the objects detected by the sensor, namely, the formation information between the objects. Therefore, when the two number sequences include the sequence segments that are the same or have the high matching degree, it indicates that object sets corresponding to the segments in the two number sequences have a same position relationship, that is, have same formation information. If different sensors detect same or similar formation information, it may be considered that the two sensors detect a same object set.

In this embodiment of this application, the third subsequence is also referred to as target formation information, and represents same or similar formation information detected by the plurality of sensors.

Specifically, because the sensor has a specific miss detection rate, it is not required that the third subsequence completely matches the segments in the touch position sequence A and the touch position sequence B, provided that a matching degree between the third subsequence and the touch position sequence A and a matching degree between the third subsequence and the touch position sequence B are both greater than a third threshold. In this embodiment of this application, the matching degree is also referred to as similarity. Specifically, the third threshold may be 90%. The third threshold may be another value other than 90%, for example, 95% or 99%. This is not limited herein.

For example, both the touch position sequence A and the touch position sequence B shown in FIG. 12 include a sequence segment (7.5 m, 7.3 m, 1.5 m, 7.6 m, 1.3 m). The processing device may use the segment as the third subsequence. In this case, both a matching degree between the third subsequence and the touch position sequence A and a matching degree between the third subsequence and the touch position sequence B are 100%.

Optionally, the third subsequence may be determined by using the LCS algorithm. In this embodiment of this application, all common sequences of the plurality of touch position sequences may be obtained by using the LCS algorithm, to implement matching of same position features in the plurality of touch position sequences. Because a longest common subsequence is calculated by using the LCS algorithm, the third subsequence calculated by using the LCS algorithm may include a longest subsequence in subsequences whose matching degrees with the foregoing plurality of touch position sequences are greater than the second threshold.

1108: Fuse, based on formation position information of target objects in the third subsequence, detection information from the sensor A and the sensor B for a same target object.

The third subsequence includes a plurality of pieces of touch point position information. Data corresponding to each piece of touch point position information in the third subsequence may be found in the touch position sequence A and the touch position sequence B. For example, for touch point position information with a sequence number 2 in the touch position sequence A, touch point position information of a target object is 7.3 m, and touch point position information of another target object before/after the target object is 7.5 m and 1.5 m.

In this embodiment of this application, a single piece of touch point position information in the touch position sequence or the third subsequence is also referred to as the formation position information, indicating a position of a single target object in the target object set.

In this embodiment of this application, the touch point position information of the target object is referred to as a feature of the target object, and the touch point position information of the another target object before/after or near the target object is referred to as a surrounding feature. The surrounding feature may also include touch point position information of more nearby target objects other than the touch point position information of the another target object before/after the target object. This is not limited herein.

In the touch position sequence B, touch point position information with a same feature of a target object and a same surrounding feature may be found, namely, touch point position information with a sequence number 11. The two pieces of touch point position information are in the third subsequence and have the same feature of the target object and the same surrounding feature, it may be considered that the two pieces of touch point position information reflect a same object. Therefore, the processing device may fuse detection information corresponding to the sequence number 2 and detection information corresponding to the sequence number 11, to obtain fused information of the target object.

For example, a camera corresponding to the touch position sequence A may detect appearance information such as a size and a shape of an object corresponding to the sequence number 2. For a vehicle, information such as a model, a color, and a license plate of a vehicle corresponding to the sequence number 2 may be detected. A radar corresponding to the touch position sequence B may detect information such as a moving speed of an object corresponding to the sequence number 11. For a vehicle, information such as a speed and an acceleration of a vehicle corresponding to the sequence number 11 may be detected. The processing device may fuse the foregoing information such as the model, the color, and the license plate with the information such as the speed and the acceleration of the vehicle, to obtain fused information of the vehicle.

In this embodiment of this application, all the common sequences of the plurality of touch interval sequences may be determined by using the LCS algorithm, to obtain, through matching, all segments that are of the touch interval sequences and that have the same position feature. If a plurality of segments are the common sequences, and some non-common sequences are included in the common sequences, the non-common sequences included in the common sequences may be identified. The non-common sequences reflect different position relationships in different sensors. In this case, it may be considered that the non-common sequences are included in the common sequences due to false detection or missing detection of the sensors. Therefore, fault tolerance is performed on the non-common sequences, that is, the non-common sequences are allowed to correspond to the target objects detected by different sensors, to implement fusion of the detection information.

In this embodiment of this application, the third subsequence determined by using the LCS algorithm may include the longest subsequence in subsequences whose matching degrees with the foregoing plurality of touch position sequences are greater than the third threshold. Position relationships between the target objects may be occasionally similar. Therefore, a longer length of the determined subsequence indicates a lower possibility of having similar position relationships, and as a result, a contingency may be more easily avoided. The longest subsequence is determined by using the LCS algorithm, so that target formation information of the same target object set may be accurately determined.

For example, position relationships between two target objects may be occasionally similar. However, if a standard is improved to that position relationships of ten target objects have a high matching degree, a possibility that the ten target objects have similar position relationships is greatly lower than a possibility that the two target objects have similar position relationships. Therefore, if a first subsequence of the ten target objects is determined by using the LCS algorithm, a possibility that the ten target objects are same ten target objects that correspond to detection results obtained by different sensors is higher, and a possibility of a mismatch is reduced.

In this embodiment of this application, the touch point position information indicates a left-right relationship that the different target objects touch the reference line, and may be consecutive values or data. Therefore, based on the consecutive values or data, formation information of the target object may be more accurately distinguished from formation information of another non-target object. Therefore, detection information of the same target object is more accurately fused.

In addition, a motion trend between the target objects may be analyzed or calculated based on the consecutive values or data. In addition to the motion trend, other information, for example, movement tracks of the target objects, may be further calculated. This is not limited herein.

In this embodiment of this application, corresponding subsequences are determined. The subsequences may be also combined to improve accuracy of formation matching.

(4) Determine an intersection based on a first subsequence and a second subsequence.

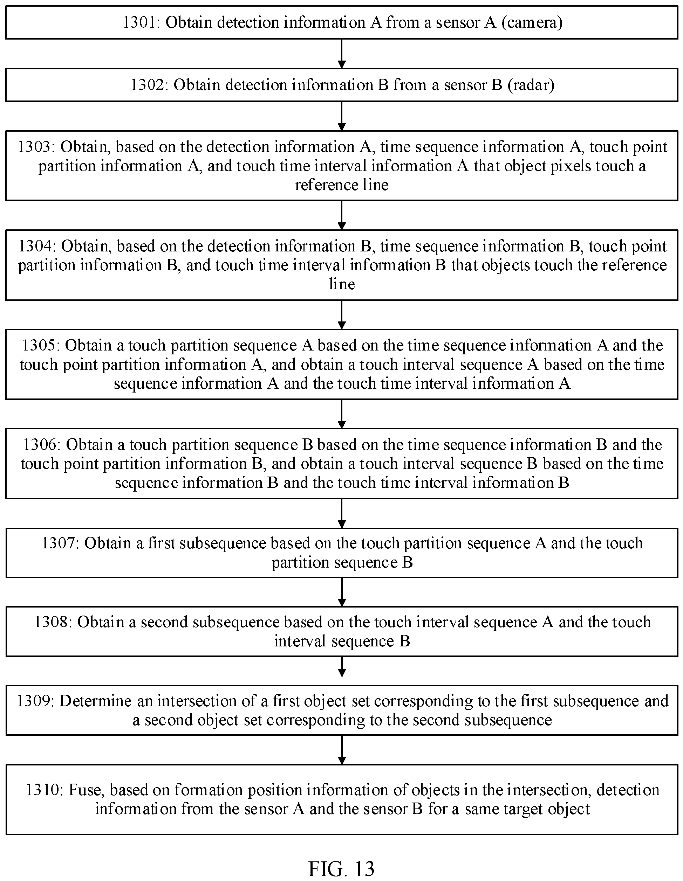

FIG. 13 is a schematic flowchart of an information processing method according to an embodiment of this application. The method includes:

1301: Obtain detection information A from a sensor A (camera).

1302: Obtain detection information B from a sensor B (radar).

For description of step 1301 and step 1302, refer to step 701 and step 702 in the embodiment shown in FIG. 7. Details are not described herein again.

1303: Obtain, based on the detection information A, time sequence information A, touch point partition information A, and touch time interval information A that object pixels touch a reference line.

The detection information A is the picture including the pixels, and the line touch information is information that the object pixels touch the reference line. Therefore, the processing device may obtain, based on the detection information A, the time sequence information A, the touch point partition information A, and the touch time interval information A that the object pixels touch the reference line.

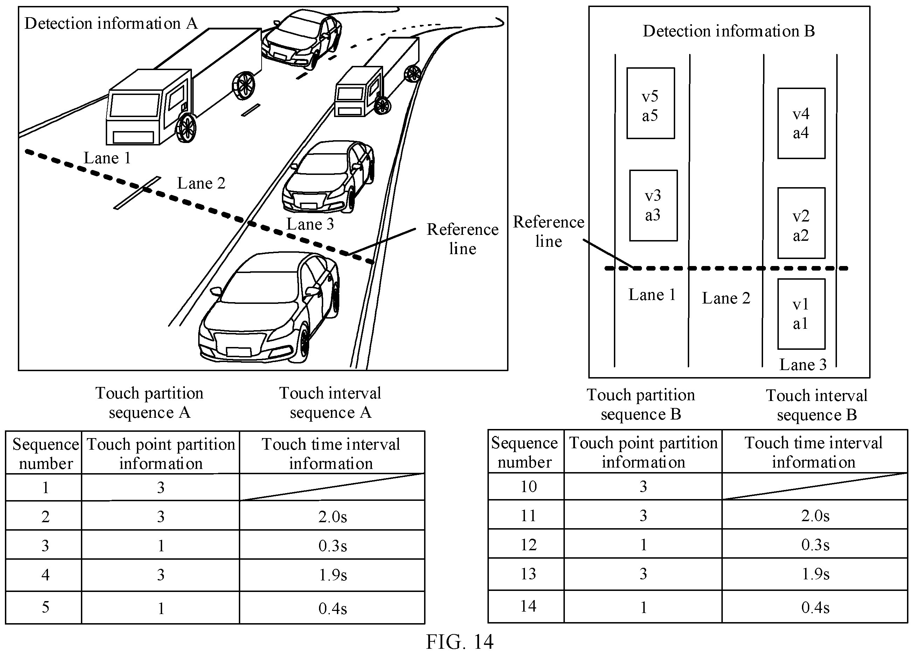

FIG. 14 is a schematic diagram of an application scenario of an information processing method according to an embodiment of this application. As shown in FIG. 14, a column of sequence numbers indicates a sequence in which the objects touch the reference line, namely, the time sequence information A. A column of touch point partition information indicates partition information of the touch points that are on the reference line and at which the objects touch the reference line, namely, the touch point partition information A, where 1 indicates the lane 1, and 3 indicates the lane 3. A column of touch time interval information indicates a difference between time at which an object touches the reference line and time at which a previous object touches the reference line, namely, the touch time interval information A, where the touch time interval information is in a unit of seconds. The touch time interval information may also be in a unit of milliseconds other than in the unit of seconds. This is not limited herein.

1304: Obtain, based on the detection information B, time sequence information B, touch point partition information B, and touch time interval information B that the objects touch the reference line.

The detection information B is a picture of objects detected by the radar in a detection range, and the line touch information is information that the objects touch the reference line. Therefore, the processing device may obtain, based on the detection information B, the time sequence information B, the touch point partition information B, and the touch time interval information B that the objects touch the reference line.

As shown in FIG. 14, a column of sequence numbers indicates a sequence in which the objects touch the reference line, namely, the time sequence information B. A column of touch point partition information indicates partition information of the touch points that are on the reference line and at which the objects touch the reference line, namely, the touch point partition information B, where 1 indicates the lane 1, and 3 indicates the lane 3. A column of touch time interval information indicates a difference between time at which an object touches the reference line and time at which a previous object touches the reference line, namely, the touch time interval information B, where the touch time interval information is in a unit of seconds. The touch time interval information may also be in a unit of milliseconds other than in the unit of seconds. This is not limited herein.

In this embodiment of this application, there is no necessary sequence between step 1301 and step 1302. Step 1301 may be performed before or after step 1302, or step 1301 and step 1302 may be performed simultaneously. This is not limited herein. There is no necessary sequence between step 1303 and step 1304. Step 1303 may be performed before or after step 1304, or step 1303 and step 1304 may be performed simultaneously, provided that step 1303 is performed after step 1301, and step 1304 is performed after step 1302. This is not limited herein.

1305: Obtain a touch partition sequence Abased on the time sequence information A and the touch point partition information, and obtain a touch interval sequence A based on the time sequence information A and the touch time interval information A.

For a step in which the processing device obtains the touch partition sequence A based on the time sequence information A and the touch point partition information, refer to step 705 in the embodiment shown in FIG. 7. Details are not described herein again.

For a step in which the processing device obtains the touch interval sequence A based on the time sequence information A and the touch time interval information A, refer to step 905 in the embodiment shown in FIG. 9. Details are not described herein again.

1306: Obtain a touch partition sequence B based on the time sequence information B and the touch point partition information, and obtain a touch interval sequence B based on the time sequence information B and the touch time interval information B.

For a step in which the processing device obtains the touch partition sequence B based on the time sequence information B and the touch point partition information, refer to step 706 in the embodiment shown in FIG. 7. Details are not described herein again.

For a step in which the processing device obtains the touch partition sequence B based on the time sequence information B and the touch time interval information B, refer to step 906 in the embodiment shown in FIG. 9. Details are not described herein again.

In this embodiment of this application, there is no necessary sequence between step 1305 and step 1306. Step 1305 may be performed before or after step 1306, or step 1305 and step 1306 may be performed simultaneously, provided that step 1305 is performed after step 1303 and step 1306 is performed after step 1304. This is not limited herein.

1307: Obtain a first subsequence based on the touch partition sequence A and the touch partition sequence B.

The touch partition sequence A and the touch partition sequence B are essentially two number sequences. The processing device may compare the two number sequences. When finding that the two number sequences include sequence segments that are the same or have a high matching degree, the processing device may consider that the sequence segment is a common part of the two sequences. In this embodiment of this application, the sequence segment is also referred to as the first subsequence. The touch partition sequence reflects a position relationship between the objects detected by the sensor, namely, the formation information between the objects. Therefore, when the two number sequences include the sequence segments that are the same or have the high matching degree, it indicates that object sets corresponding to the segments in the two number sequences have a same position relationship, that is, have same formation information. If different sensors detect same or similar formation information, it may be considered that the two sensors detect a same object set.

In this embodiment of this application, the first subsequence is also referred to as target formation information, and represents same or similar formation information detected by the plurality of sensors.

Specifically, because the sensor has a specific miss detection rate, it is not required that the first subsequence completely matches the segments in the touch partition sequence A and the touch partition sequence B, provided that a matching degree between the first subsequence and the touch partition sequence A and a matching degree between the first subsequence and the touch partition sequence B are both greater than a first threshold. In this embodiment of this application, the matching degree is also referred to as similarity. Specifically, the first threshold may be 90%. The first threshold may be another value other than 90%, for example, 95% or 99%. This is not limited herein.

For example, both the touch partition sequence A and the touch partition sequence B shown in FIG. 8 include a sequence segment (3, 3, 1, 3, 1). The processing device may use the segment as the first subsequence. In this case, both a matching degree between the first subsequence and the touch partition sequence A and a matching degree between the first subsequence and the touch partition sequence B are 100%.

1308: Obtain a second subsequence based on the touch interval sequence A and the touch interval sequence B.

The touch interval sequence A and the touch interval sequence B are essentially two number sequences. The processing device may compare the two number sequences. When finding that the two number sequences include sequence segments that are the same or have a high matching degree, the processing device may consider that the sequence segment is a common part of the two sequences. In this embodiment of this application, the sequence segment is also referred to as the second subsequence. The touch interval sequence reflects a position relationship between the objects detected by the sensor, namely, the formation information between the objects. Therefore, when the two number sequences include the sequence segments that are the same or have the high matching degree, it indicates that object sets corresponding to the segments in the two number sequences have a same position relationship, that is, have same formation information. If different sensors detect same or similar formation information, it may be considered that the two sensors detect a same object set.

In this embodiment of this application, the second subsequence is also referred to as target formation information, and represents same or similar formation information detected by the plurality of sensors.

Specifically, because the sensor has a specific miss detection rate, it is not required that the second subsequence completely matches the segments in the touch interval sequence A and the touch interval sequence B, provided that a matching degree between the second subsequence and the touch interval sequence A and a matching degree between the second subsequence and the touch interval sequence B are both greater than a second threshold. In this embodiment of this application, the matching degree is also referred to as similarity. Specifically, the second threshold may be 90%. The second threshold may be another value other than 90%, for example, 95% or 99%. This is not limited herein.

For example, both the touch interval sequence A and the touch interval sequence B shown in FIG. 10 include a sequence segment (2.0s, 0.3 s, 1.9s, 0.4s). The processing device may use the segment as the second subsequence. In this case, both a matching degree between the second subsequence and the touch interval sequence A and a matching degree between the second subsequence and the touch interval sequence B are 100%.

1309: Determine an intersection of a first object set corresponding to the first subsequence and a second object set corresponding to the second subsequence.

Objects indicated by the first subsequence (3, 3, 1, 3, 1) are on a side of the sensor A, with sequence numbers of 1 to 5, and correspond to objects on a side of the sensor B, with sequence numbers of 10 to 14. In this embodiment of this application, an object set corresponding to the first subsequence is also referred to as the first object set.

Objects indicated by the second subsequence (2.0s, 0.3s, 1.9s, 0.4s) are on the side of the sensor A, with sequence numbers of 2 to 5, and correspond to objects on the side of the sensor B, with sequence numbers of 11 to 14. In this embodiment of this application, an object set corresponding to the second subsequence is also referred to as the second object set.

An intersection of the two object sets is obtained, that is, an intersection of objects whose sequence numbers are 1 to 5 and objects whose sequence numbers are 2 to 5 is obtained on the side of the sensor A. To be specific, an intersection, which is a set of target objects whose sequence numbers are 2 to 5, is determined. Correspondingly, on the side of the sensor B, the intersection is a set of target objects whose sequence numbers are 11 to 14. In this embodiment of this application, an intersection of the first object set and the second object set is also referred to as a target object set.

1310: Fuse, based on formation position information of objects in the intersection, detection information from the sensor A and the sensor B for a same target object.

The first subsequence includes a plurality of pieces of touch point partition information. Data corresponding to each piece of touch point partition information in the first subsequence may be found in the touch partition sequence A and the touch partition sequence B. For example, for touch point partition information with a sequence number 4 in the touch partition sequence A, touch point partition information of a target obj ect is 3, and touch point partition information of another target object before/after the target object is 1.

In this embodiment of this application, a single piece of touch point partition information in the touch partition sequence or the first subsequence is also referred to as the formation position information, indicating a position of a single target object in the target object set.

In this embodiment of this application, the partition information of the target object is referred to as a feature of the target object, and partition information of the another target object before/after or near the target object is referred to as a surrounding feature. The surrounding feature may also include touch point partition information of more nearby target objects other than the touch point partition information of the another target object before/after the target object. This is not limited herein.

In the touch partition sequence B, touch point partition information with a same feature of a target object and a same surrounding feature may be found, namely, touch point partition information with a sequence number 13. The two pieces of touch point partition information are in the first subsequence and have the same feature of the target object and the same surrounding feature, it may be considered that the two pieces of touch point partition information reflect a same object. Therefore, the processing device may fuse detection information corresponding to the sequence number 4 and detection information corresponding to the sequence number 13, to obtain fused information of the target object.

For example, a camera corresponding to the touch partition sequence A may detect appearance information such as a size and a shape of an object corresponding to the sequence number 4. For a vehicle, information such as a model, a color, and a license plate of a vehicle corresponding to the sequence number 4 may be detected. A radar corresponding to the touch partition sequence B may detect information such as a moving speed of an object corresponding to the sequence number 13. For a vehicle, information such as a speed and an acceleration of a vehicle corresponding to the sequence number 13 may be detected. The processing device may fuse the foregoing information such as the model, the color, and the license plate with the information such as the speed and the acceleration of the vehicle, to obtain fused information of the vehicle.

Similarly, detection information that is in the second subsequence and that has a same feature of a target object and a same surrounding feature may be fused. For details, refer to the foregoing procedure of fusion based on the first subsequence. Details are not described herein again.

For description of the feature of the target object and the surrounding feature that are in the second subsequence, refer to step 908 in the embodiment shown in FIG. 9. Details are not described herein again.

In this embodiment of this application, the intersection of the first object set and the second object set is determined based on the first object set corresponding to the first subsequence and the second object set corresponding to the second subsequence, and the intersection is used as the target object set. Objects in the intersection correspond to the first subsequence, that is, similar touch partition information may be obtained based on detection information from different sensors. In addition, the objects in the intersection correspond to the second subsequence, that is, similar touch time interval information exists based on the detection information from different sensors. If a plurality of pieces of similar information indicating a position relationship between the objects may be obtained based on the detection information from the plurality of sensors, a possibility that object sets corresponding to the detection information are a same object set is higher than that when only one piece of similar information indicating a position relationship between the objects may be obtained. Therefore, screening is performed on the intersection of the objects corresponding to the plurality of subsequences, so that formation information of the target object may be more accurately distinguished from formation information of another non-target object. Therefore, detection information of the same target object is more accurately fused.

In this embodiment of this application, in addition to the intersection of objects corresponding to the first subsequence and objects corresponding to the second subsequence, an intersection of objects corresponding to other subsequences may also be used, for example, an intersection of the objects corresponding to the first subsequence and objects corresponding to a third subsequence, an intersection of the objects corresponding to the second subsequence and the objects corresponding to the third subsequence, or an intersection of objects corresponding to another subsequence and the objects corresponding to any one of the first to the third subsequences. Other subsequences are also used to indicate a position relationship between the objects, for example, a distance or a direction between the objects. This is not limited herein. An intersection of objects corresponding to different subsequences is obtained, so that an appropriate subsequence may be flexibly selected for operation, thereby improving feasibility and flexibility of the solution.

In this embodiment of this application, in addition to an intersection of objects corresponding to two subsequences, an intersection of objects corresponding to more subsequences may be obtained, for example, an intersection of the objects corresponding to the first subsequence, the second subsequence, and the third subsequence is obtained. When a larger quantity of subsequences is used, it indicates that more types of similar information indicating position relationships between the objects may be obtained based on the detection information from the plurality of sensors, and a possibility that object sets corresponding to the detection information are a same object set is higher. Therefore, screening is performed on the intersection of the objects corresponding to the plurality of subsequences, so that formation information of the target object may be more accurately distinguished from formation information of another non-target object. Therefore, detection information of the same target object is more accurately fused.

In this embodiment of this application, the line touch information is obtained based on the position feature set. Because the line touch information is information that the object touches the reference line. Data including a specific value or a specific position feature, such as touch time, a touch interval, and a touch position, may be obtained when the object touches the reference line. Therefore, a set of line touch data, such as a number sequence including a plurality of touch time points, a number sequence including a plurality of touch intervals, or a distribution relationship including a plurality of touch positions, may be obtained based on specific values or specific position features that a plurality of target objects touch the line. Because the foregoing set of line touch data has specific values or position features, an operation may be directly performed, without any other data processing. Therefore, the target formation information whose matching degree meets the preset threshold may be quickly determined.

In this embodiment of this application, the formation information may be determined by using the line drawing method. The formation information may also be determined by using another method, for example, the image feature-matching method.

2: image feature-matching method

For a human, the formation information may be represented as a complete shape. For a device, the complete shape abstracted out may be represented as an image feature. In this embodiment of this application, a method for determining the formation information by using the complete image feature is referred to as the image feature-matching method.

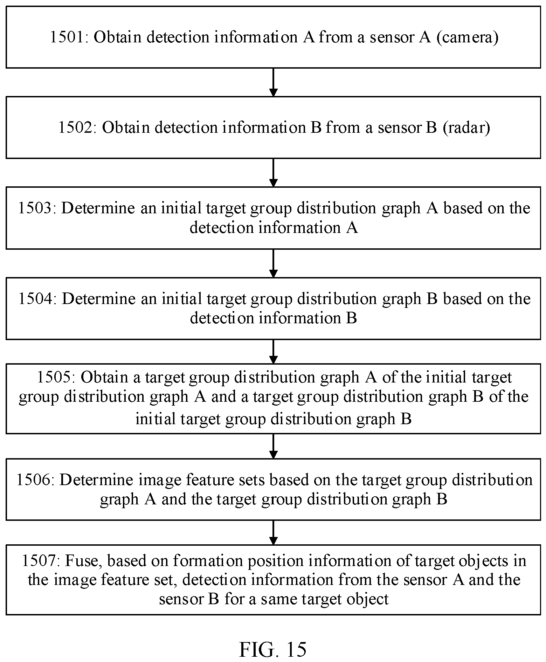

Based on the detection system shown in FIG. 3a, the following describes in detail the steps of the information processing method according to this embodiment of this application with reference to FIG. 15. FIG. 15 is a schematic flowchart of an information processing method according to an embodiment of this application. The method includes:

1501: Obtain detection information A from a sensor A (camera).

1502: Obtain detection information B from a sensor B (radar).

For description of step 1501 and step 1502, refer to step 701 and step 702 in the embodiment shown in FIG. 7. Details are not described herein again.

1503: Determine an initial target group distribution graph Abased on the detection information A.

Because the detection information A is a picture including pixels, the processing device may distinguish different objects based on the pixels in the picture, and mark feature points for the objects. A shape formed by the feature points is used as the initial target group distribution graph A.

Specifically, marking for the feature points may follow a unified rule. For example, for vehicle marking, a central point of the front of a vehicle may be used as a feature point. The feature point may also be another point other than the center point of the front of the vehicle, for example, a center point of a license plate. This is not limited herein.

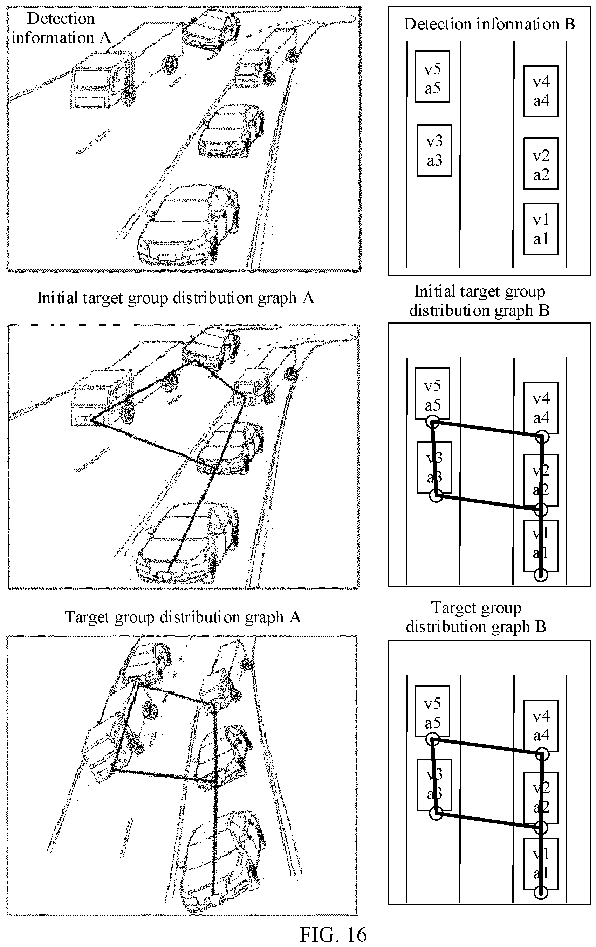

For example, FIG. 16 is a schematic diagram of an application scenario of an information processing method according to an embodiment of this application. As shown in FIG. 16, central points of license plates are marked, and marking points are connected to form the initial target group distribution graph A, where the distribution graph is in a shape similar to the number "9".

Optionally, a corresponding shape feature may be extracted by using a scale-invariant feature transform (scale-invariant feature transform, SIFT) algorithm, to obtain the initial target group distribution graph A.

1504: Determine an initial target group distribution graph B based on the detection information B.

The detection information B is a picture of objects detected by the radar in a detection range, and the objects detected by the radar have marking information in the picture, where the marking information represents the corresponding objects. Therefore, the processing device may use a shape formed by the marking information in the picture as the initial target group distribution graph B.

For example, as shown in FIG. 16, positions of the marking information are connected to form the initial target group distribution graph B, where the distribution graph is also in a shape similar to the number "9".

Optionally, a corresponding shape feature may be extracted by using the SIFT algorithm, to obtain the initial target group distribution graph B.

1505: Obtain a target group distribution graph A of the initial target group distribution graph A and a target group distribution graph B of the initial target group distribution graph B.

The processing device may obtain a standard viewport graph of the initial target group distribution graph A by using a viewport change algorithm, and uses the standard viewport graph of the initial target group distribution graph A as the target group distribution graph A. Similarly, the processing device may obtain a standard viewport graph of the initial target group distribution graph B by using the viewport change algorithm, and uses the standard viewport graph of the initial target group distribution graph B as the target group distribution graph B.

For example, as shown in FIG. 16, a viewport of the initial target group distribution graph B is used as a standard viewport, to change a viewport of the initial target group distribution graph A, thereby obtaining a target group distribution graph A that has a same viewport as the target group distribution graph B.

1506: Determine image feature sets based on the target group distribution graph A and the target group distribution graph B.

The target group distribution graph A and the target group distribution graph B show two shapes. The processing device may compare image features of the two shapes. When finding that the two image features include feature sets that are the same or have a high matching degree, the processing device may consider that the feature set is a common part of the two image features. In this embodiment of this application, the feature set is also referred to as the image feature set. The image feature reflects a position relationship between the objects detected by the sensor, namely, the formation information between the objects. Therefore, when the two image features include the feature sets that are the same or have the high matching degree, it indicates that object sets corresponding to the feature sets in the two image features have a same position relationship, that is, have same formation information. If different sensors detect same or similar formation information, it may be considered that the two sensors detect a same object set.

In this embodiment of this application, the image feature set is also referred to as target formation information, and represents same or similar formation information detected by the plurality of sensors.

Specifically, because the sensor has a specific miss detection rate, it is not required that the image feature set completely matches the features in the target group distribution graph A and the target group distribution graph B, provided that a matching degree between the image feature set and the target group distribution graph A and a matching degree between the image feature set and the target group distribution graph B are both greater than a third threshold. In this embodiment of this application, the matching degree is also referred to as similarity. Specifically, the third threshold may be 90%. The third threshold may be another value other than 90%, for example, 95% or 99%. This is not limited herein.

Optionally, a facial recognition algorithm or a fingerprint recognition algorithm may be used to obtain the image feature set matching different target group distribution graphs.

1507: Fuse, based on formation position information of target objects in the image feature set, detection information from the sensor A and the sensor B for a same target object.

The image feature set includes a plurality of pieces of marking information or a plurality of marking points. Data corresponding to each piece of marking information or each marking point in the image feature set may be found in the target group distribution graph A and the target group distribution graph B. For example, in FIG. 16, a marking point at the bottom of the shape "9" in the target group distribution graph A is used as an example.

In this embodiment of this application, a single piece of marking information or a single marking point in the target group distribution graph or the image feature set is also referred to as the formation position information, indicating a position of a single target object in the target object set.

Marking information with a same position may also be found in the target group distribution graph B, that is, marking information at the bottom of the shape "9" in the target group distribution graph B. The two pieces of marking information and the marking points are in the image feature set and have the same position feature, it may be considered that the two pieces of marking information and the marking points reflect a same object. Therefore, the processing device may fuse detection information corresponding to the marking point at the bottom of the shape "9" and detection information corresponding to the marking information at the bottom of the shape "9", to obtain fused information of the target object.

For example, a camera corresponding to the target group distribution graph A may detect appearance information such as a size and a shape of the object. For a vehicle, information such as a model, a color, and a license plate of a corresponding vehicle may be detected. A radar corresponding to the target group distribution graph B may detect information such as a moving speed of the object. For a vehicle, information such as a speed and an acceleration of a corresponding vehicle may be detected. The processing device may fuse the foregoing information such as the model, the color, and the license plate with the information such as the speed and the acceleration of the vehicle, to obtain fused information of the vehicle.

In this embodiment of this application, the plurality of corresponding initial target group distribution graphs are obtained based on the detection information from different sensors, the plurality of corresponding target group distribution graphs are obtained by using the viewport change algorithm. Then, the image feature sets of the plurality of target group distribution graphs are obtained, and the image feature set is used as the target formation information. It is determined, the image feature set whose matching degrees with the plurality of target group distribution graphs are greater than a preset threshold is determined based on the plurality of target group distribution graphs from the plurality of sensors. The image features may intuitively reflect a position relationship between the objects displayed in the picture. Therefore, the image feature set is determined based on a plurality of target group distribution graphs, so that detection results indicating similar position relationships may be intuitively reflected. That is, detection results that are of a same target group and that are obtained by different sensors may be determined through matching. In this way, the detection information is accurately fused.

In this embodiment of this application, the image feature-matching method may be combined with the line drawing method, to obtain a more accurate result.

3: Combination of the image feature-matching method and the line drawing method

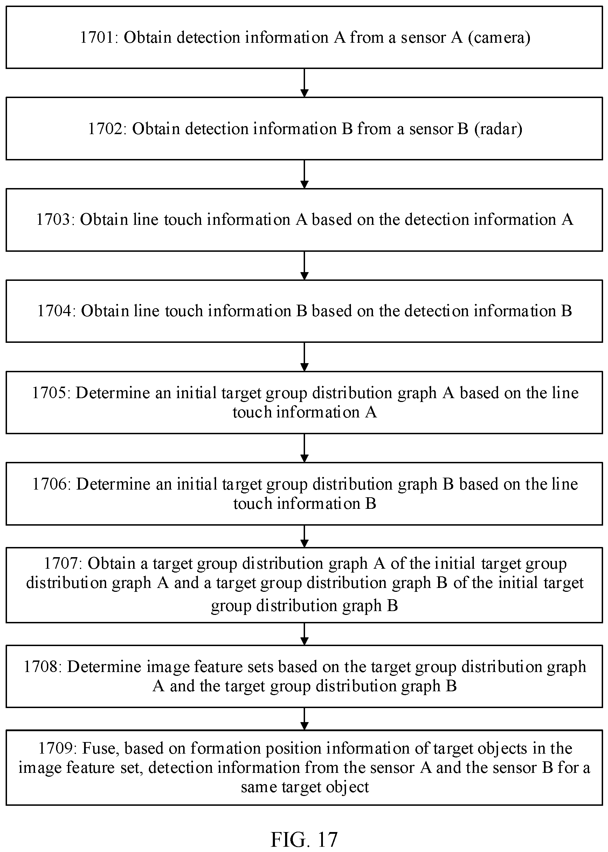

FIG. 17 is a schematic flowchart of an information processing method according to an embodiment of this application. The method includes the following steps.

1701: Obtain detection information A from a sensor A (camera).

1702: Obtain detection information B from a sensor B (radar).

For description of step 1701 and step 1702, refer to step 701 and step 702 in the embodiment shown in FIG. 7. Details are not described herein again.

1703: Obtain line touch information Abased on the detection information A.

It has been described in the embodiment shown in FIG. 6 that the line touch information includes the time sequence information, the touch point partition information, the touch point position information, the touch time interval information, and the like that the objects touch the reference line. The processing device may obtain a plurality of the foregoing line touch information, for example, obtain time sequence information A and touch point partition information A based on the detection information A. For a procedure of obtaining the time sequence information A and the touch point partition information A, refer to step 703 in the embodiment shown in FIG. 7. Details are not described herein again.

In addition to obtaining the time sequence information A and the touch point partition information A, the processing device may further obtain another line touch information, for example, the time sequence information A and the touch time interval information A shown in step 903 in the embodiment shown in FIG. 9, the time sequence information A and the touch point position information A shown in step 1103 in the embodiment shown in FIG. 11, or the time sequence information A, the touch point partition information A, and the touch time interval information A shown in step 1303 in the embodiment shown in FIG. 13. This is not limited herein.

1704: Obtain line touch information B based on the detection information B.

Corresponding to step 1703, depending on types of the line touch information obtained by the processing device based on the detection information A, the processing device obtains corresponding line touch information of the same types based on the detection information B. For a procedure of obtaining the line touch information, refer to the embodiment shown in FIG. 7, FIG. 9, FIG. 11, or FIG. 13. Details are not described herein again.

1705: Determine an initial target group distribution graph Abased on the line touch information A.

The object touches the reference line only at a moment. Therefore, the line touch information may reflect a moment of obtaining the detection information. The processing device may determine the initial target group distribution graph Abased on the detection information A obtained at the moment reflected by the line touch information A. The obtained initial target group distribution graph A reflects formation information obtained at the moment at which the line touch information A is obtained. For a procedure of obtaining the initial target group distribution graph A, refer to step 1503 in the embodiment shown in FIG. 15. Details are not described herein again.

1706: Determine an initial target group distribution graph B based on the line touch information B.

The processing device may determine the line touch information B that has the same formation information as the line touch information A. Because the line touch information mainly reflects the formation information of an object set, it may be considered that the line touch information B is the same as the line touch information A.

The processing device may determine the initial target group distribution graph B based on the detection information B obtained at the moment reflected by the line touch information B. The obtained initial target group distribution graph B reflects formation information obtained at the moment at which the line touch information B is obtained. For a procedure of obtaining the initial target group distribution graph B, refer to step 1504 in the embodiment shown in FIG. 15. Details are not described herein again.

1707: Obtain a target group distribution graph A of the initial target group distribution graph A and a target group distribution graph B of the initial target group distribution graph B.

1708: Determine image feature sets based on the target group distribution graph A and the target group distribution graph B.

1709: Fuse, based on formation position information of target objects in the image feature set, detection information from the sensor A and the sensor B for a same target object.

For description of step 1707 to step 1709, refer to step 1505 to step 1507 in the embodiment shown in FIG. 15. Details are not described herein again.

In this embodiment of this application, similarity between images obtained at close time points is high. Therefore, if a same time point is not specified, when matching is performed on the initial target object distribution graphs from different sensors, interference is introduced due to an initial target group distribution graph obtained at a close time point. As a result, an error occurs when matching is performed on the distribution graphs, and an error occurs when the image feature set is obtained. Consequently, detection information obtained at different moments is fused, causing an error in fusion of the detection information. This error can be avoided by using the line touch information. Specifically, the plurality of initial target group distribution graphs are determined by using the line touch information. The plurality of initial target group distribution graphs have same line touch information. This indicates that the plurality of initial target group distribution graphs are obtained at a same time point, and may ensure that the detection information for fusion is obtained at the same time point, thereby improving accuracy of fusion of the detection information.

### 2. Application of the information processing method according to an embodiment of this application

The method according to this embodiment of this application may be used to obtain fused information, and also may be used for another purpose, for example, implement mapping of spatial coordinate systems of different sensors, implement mapping of time axes of different sensors, and perform functions such as error correction or filtering on the sensors.

### 1: Mapping of spatial coordinate systems of different sensors

Specifically, a plurality of sensors may include a first sensor and a second sensor, where a spatial coordinate system corresponding to the first sensor is a standard coordinate system, and a spatial coordinate system corresponding to the second sensor is a target coordinate system. To implement mapping of the spatial coordinate systems of different sensors, after embodiments shown in FIG. 7 to FIG. 17 are implemented, the method may further include:

The processing device determines, based on fused detection information, mapping relationships between a plurality of pieces of standard point information and a plurality of pieces of target point information, where the fused detection information is obtained by fusing the detection information that is in the plurality of pieces of formation information and that corresponds to a same target object. In this embodiment of this application, the fused detection information is also referred to as the fused information. The standard point information indicates position information of objects that are from the target object set and that are in the standard coordinate system, the target point information indicates position information of the objects that are from the target object set and that are in the target coordinate system, and the plurality of pieces of standard point information are in a one-to-one correspondence with the plurality of target point information.

After determining the mapping relationship, the processing device may determine a mapping relationship between the standard coordinate system and the target coordinate system based on the mapping relationship between the standard point information and the target point information.

In this embodiment of this application, the mapping relationships between the plurality of pieces of standard point information and the plurality of pieces of target point information are determined based on the fused detection information, and the mapping relationship between the standard coordinate system and the target coordinate system is determined based on the mapping relationships between the plurality of pieces of standard point information and the plurality of pieces of target point information. According to the method in this embodiment of this application, mapping between coordinate systems of different sensors may be implemented provided that detection information from different sensors can be obtained. Subsequent steps of determining the target formation information, performing mapping on the point information, and the like may be implemented by the processing device, without manual calibration and mapping. The processing device performs matching on the target formation information, so that an accurate operation by the device improves accuracy of point information mapping. In addition, fusion of the detection information and mapping between the coordinate systems may be implemented provided that the detection information from different sensors can be obtained. This avoids a scenario limitation caused by manual calibration, and ensures accuracy and universality of fusion of the detection information.

### 2: Mapping of time axes of different sensors

The processing device calculates a time difference between time axes of the plurality of sensors based on a fusion result of the detection information that is in the plurality of pieces of formation information and that corresponds to the same target object. The time difference may be used to implement mapping between the time axes of different sensors.

In this embodiment of this application, the time difference between the time axes of the plurality of sensors is calculated based on the fusion result of the detection information of the same target object, so that the time axes of different sensors may be aligned based on the time difference. The time axis alignment method provided in this embodiment of this application may be implemented provided that the detection information from different sensors can be obtained. The plurality of sensors do not need to be in a same time synchronization system. This extends an application scenario of time axis alignment of different sensors, and also extends an application scope of information fusion.

### 3: Error correction or filtering on sensors

Specifically, a plurality of sensors may include a standard sensor and a to-be-detected sensor. The method may further include:

The processing device obtains standard formation information that is in the target formation information and that corresponds to the standard sensor. The processing device obtains to-be-detected formation information that is in the target formation information and that corresponds to the to-be-detected sensor. The processing device determines a difference between the to-be-detected formation information and the standard formation information. The processing device obtains an error parameter based on the foregoing difference and the standard formation information, where the error parameter indicates an error of the to-be-detected formation information, or indicates a performance parameter of the to-be-detected sensor.

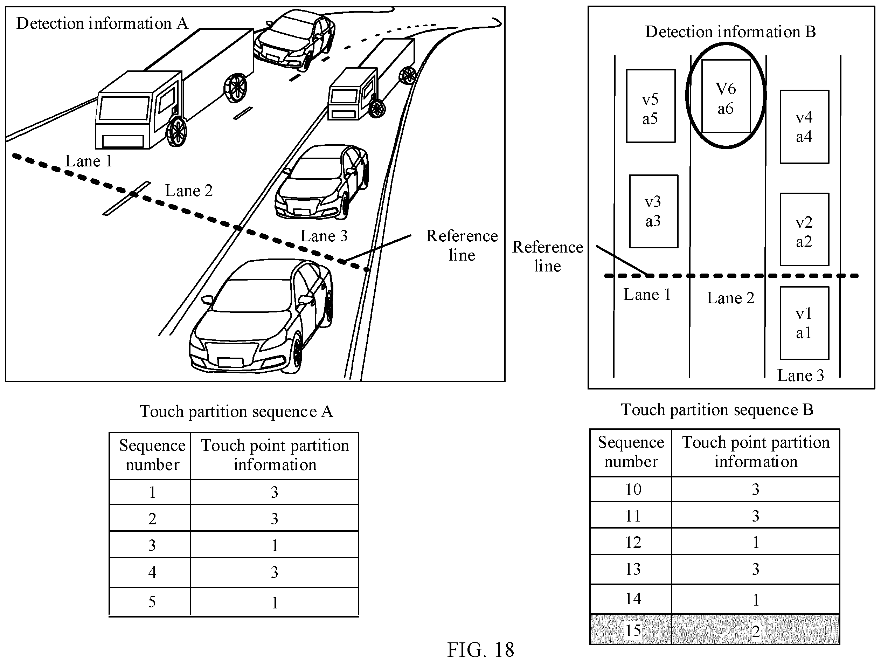

FIG. 18 is a schematic diagram of an application scenario of an information processing method according to an embodiment of this application. As shown in FIG. 18, if a sensor B detects one piece of data by mistake, for example, v6a6 data in the figure, it may be determined, based on a difference between a touch partition sequence A and a touch partition sequence B, that data with a sequence number 15 is detected by the sensor B by mistake.

As described above, false detection information of a sensor may be obtained to calculate a false detection rate of the sensor, to evaluate performance of the sensor.

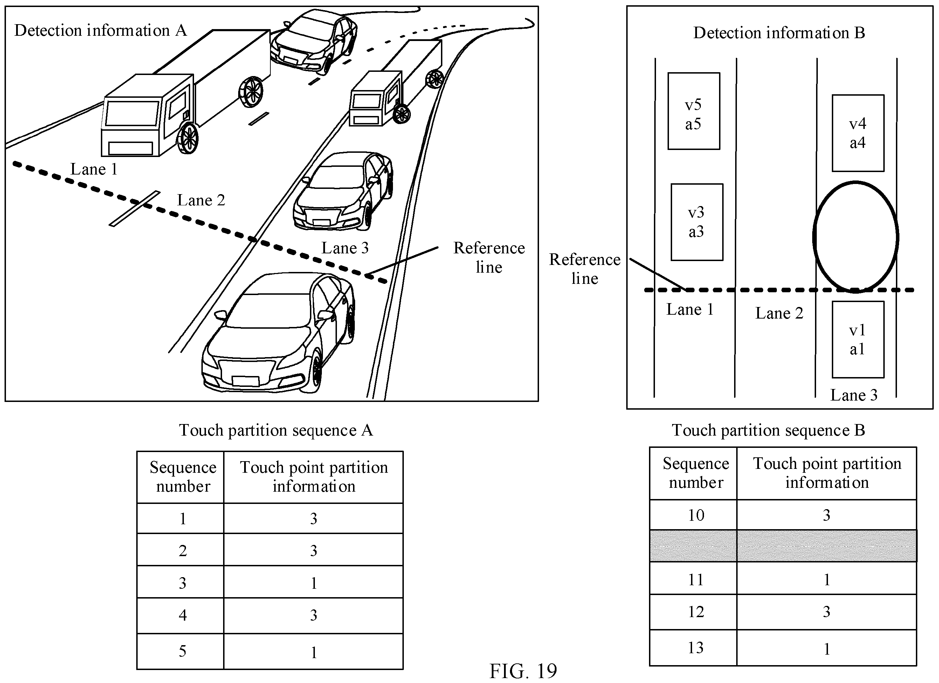

FIG. 19 is a schematic diagram of an application scenario of an information processing method according to an embodiment of this application. As shown in FIG. 19, if a sensor B misses detection of one piece of data, for example, a target object on a lane 3 corresponding to a sequence number 2 in the figure, it may be determined, based on a difference between a touch partition sequence A and a touch partition sequence B, that one target object between a sequence number 10 and a sequence number 11 is missed.

As described above, miss detection information of a sensor may be obtained to calculate a miss detection rate of the sensor, to evaluate performance of the sensor.

In this embodiment of this application, the standard sensor is used as a standard for detection, and the error parameter is obtained based on the difference between the to-be-detected formation information and the standard formation information. When the error parameter indicates the error of the to-be-detected formation information, information that is in the to-be-detected formation information and that corresponds to the error parameter may be corrected based on the error parameter and the standard formation information. When the error parameter indicates the performance parameter of the to-be-detected sensor, a performance parameter such as a false detection rate of the to-be-detected sensor may be determined. Therefore, data analysis is implemented for the to-be-detected sensor, to select a sensor.

### 3. Processing device corresponding to an information processing method according to an embodiment of this application

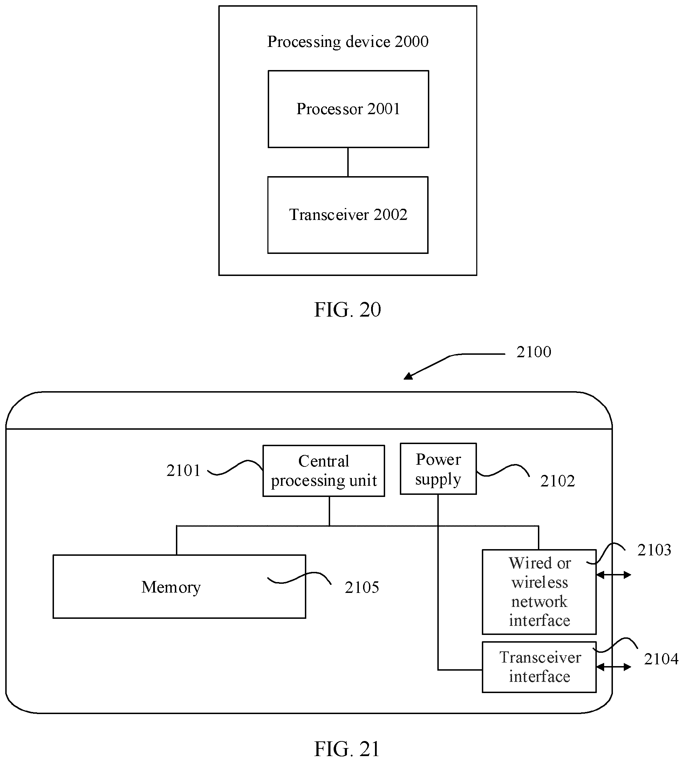

The following describes a processing device according to an embodiment of this application. FIG. 20 is a schematic diagram of a structure of a processing device according to an embodiment of this application. A processing device 2000 is located in a detection system. The detection system further includes at least two sensors. Detection information obtained by the at least two sensors includes detection information separately from the at least two sensors for at least two same target objects. The processing device 2000 includes a processor 2001 and a transceiver 2002.

The transceiver 2002 is configured to obtain at least two pieces of the detection information from the at least two sensors, where the at least two sensors are in a one-to-one correspondence with the at least two pieces of detection information.

The processor 2001 is configured to: determine at least two pieces of corresponding formation information based on the at least two pieces of detection information, where each piece of formation information is used to describe a position relationship between objects detected by the corresponding sensors, and the objects include the target objects; determine target formation information based on the at least two pieces of formation information, where a matching degree between the target formation information and each of the at least two pieces of formation information is greater than a preset threshold, the target formation information is used to describe a position relationship between the at least two target objects, and the target formation information includes formation position information of target objects; and fuse, based on formation position information of any one of the target objects, the detection information that is in the at least two pieces of formation information and that corresponds to a same target object.

In an optional implementation, the detection information includes a position feature set. The position feature set includes at least two position features, and the position features indicate position relationships between the objects detected by the corresponding sensors and objects around the objects.

In an optional implementation, the processor 2001 is specifically configured to: obtain at least two pieces of corresponding line touch information based on at least two position feature sets, where each of the at least two pieces of line touch information is used to describe information that the objects detected by the corresponding sensors touch a reference line, and the at least two pieces of line touch information are in a one-to-one correspondence with the at least two position feature sets; and determine at least two pieces of corresponding formation information based on the at least two pieces of line touch information, where the at least two pieces of line touch information are in a one-to-one correspondence with the at least two pieces of formation information.

In an optional implementation, the line touch information includes time sequence information and touch point partition information that the objects detected by the corresponding sensors touch the reference line. The touch point partition information indicates partition information of touch points that are on the reference line and at which the objects touch the reference line. The formation information includes a touch partition sequence, and the touch partition sequence indicates a time sequence relationship between partition positions in which the objects detected by the corresponding sensors touch the reference line.

The processor 2001 is specifically configured to: obtain first subsequences of at least two touch partition sequences, and use the first subsequence as the target formation information, where matching degrees between the first subsequences and the at least two touch partition sequences are greater than a first threshold; and fuse, based on the touch point partition information that is in the first subsequence and that corresponds to each target object, the detection information that is in the at least two touch partition sequences and that corresponds to the same target object.

In an optional implementation, the line touch information includes time sequence information and touch time interval information that the objects detected by the corresponding sensors touch the reference line. The touch time interval information indicates a time interval at which the objects touch the reference line. The formation information includes a touch interval sequence, and the touch interval sequence indicates distribution of time intervals at which the objects detected by the corresponding sensors touch the reference line.

The processor 2001 is specifically configured to: obtain second subsequences of at least two touch interval sequences, and uses the second subsequence as target formation information, where matching degrees between the second subsequences and the at least two touch interval sequences are greater than a second threshold; and fuse, based on touch time distribution information that is in the second subsequence and that corresponds to each target object, the detection information that is in the at least two touch interval sequences and that corresponds to the same target object.

In an optional implementation, the line touch information includes time sequence information, touch point partition information, and touch time interval information that the objects detected by the corresponding sensors touch the reference line. The touch point partition information indicates partition information of touch points that are on the reference line and at which the objects touch the reference line. The touch time interval information indicates a time interval at which the objects touch the reference line. The formation information includes a touch partition sequence and a touch interval sequence, where the touch partition sequence indicates a time sequence relationship between partition positions in which the objects detected by the corresponding sensors touch the reference line, and the touch interval sequence indicates distribution of time intervals at which the objects detected by the corresponding sensors touch the reference line.

The processor 2001 is specifically configured to: obtain first subsequences of at least two touch partition sequences, where matching degrees between the first subsequences and the at least two touch partition sequences are greater than a first threshold; obtain second subsequences of at least two touch interval sequences, where matching degrees between the second subsequences and the at least two touch interval sequences are greater than a second threshold; determine an intersection of a first object set and a second object set, and use the intersection as a target object set, where the first object set is a set of objects corresponding to the first subsequence, and the second object set is a set of objects corresponding to the second subsequence; and use a touch partition sequence and a touch interval sequence of the target object set as the target formation information.

In an optional implementation, the formation information includes a target group distribution graph, and the target group distribution graph indicates a position relationship between the objects.

The processor 2001 is specifically configured to: obtain at least two corresponding initial target group distribution graphs based on at least two position feature sets, where the initial target group distribution graph indicates a position relationship between objects detected by the corresponding sensors; obtain standard viewport graphs of the at least two initial target group distribution graphs by using a viewport change algorithm, and uses the at least two viewport graphs as at least two corresponding target group distribution graphs, where formation position information of the target group distribution graph includes target object distribution information of the target objects, and the target object distribution information indicates positions of the target objects in the objects detected by the corresponding sensors; obtain image feature sets of the at least two target group distribution graphs, and use the image feature set as the target formation information, where matching degrees between the image feature sets and the at least two target group distribution graphs are greater than a third threshold; and fuse, based on the target object distribution information that is in the image feature set and that corresponds to each target object, the detection information that is in the at least two target group distribution graphs and that corresponds to the same target object.

In an optional implementation, the processor 2001 is further configured to obtain, based on the at least two position feature sets, at least two pieces of line touch information of the target objects corresponding to the image feature set. Each of the at least two pieces of line touch information is used to describe information that the objects detected by the corresponding sensors touch a reference line, and the at least two pieces of line touch information are in a one-to-one correspondence with the at least two position feature sets.

The processor 2001 is specifically configured to obtain the at least two corresponding initial target group distribution graphs based on the at least two pieces of line touch information. Objects in the at least two initial target group distribution graphs have same line touch information.

In an optional implementation, the at least two sensors include a first sensor and a second sensor. A spatial coordinate system corresponding to the first sensor is a standard coordinate system, and a spatial coordinate system corresponding to the second sensor is a target coordinate system.

The processor 2001 is further configured to: determine, based on fused detection information obtained by fusing the detection information that is in the at least two pieces of formation information and that corresponds to the same target object, mapping relationships between at least two pieces of standard point information and at least two pieces of target point information, where the standard point information indicates position information of objects that are in the target object set and that are in the standard coordinate system, the target point information indicates position information of the objects that are in the target object set and that are in the target coordinate system, and the at least two pieces of standard point information are in a one-to-one correspondence with the at least two pieces of target point information; and determine a mapping relationship between the standard coordinate system and the target coordinate system based on the mapping relationship between the standard point information and the target point information.

In an optional implementation, the processor 2001 is further configured to: calculate a time difference between time axes of the at least two sensors based on a fusion result of the detection information that is in the at least two pieces of formation information and that corresponds to the same target object.

In an optional implementation, the at least two sensors include a standard sensor and a to-be-detected sensor.

The processor 2001 is further configured to: obtain standard formation information that is in the target formation information and that corresponds to the standard sensor; obtain to-be-detected formation information that is in the target formation information and that corresponds to the to-be-detected sensor; determine a difference between the to-be-detected formation information and the standard formation information; and obtain an error parameter based on the foregoing difference and the standard formation information, where the error parameter indicates an error of the to-be-detected formation information, or indicates a performance parameter of the to-be-detected sensor.

The processing device 2000 may perform the operations performed by the processing device in embodiments shown in FIG. 4 to FIG. 17. Details are not described herein again.

FIG. 21 is a schematic diagram of a structure of a processing device according to an embodiment of this application. The processing device 2100 may include one or more central processing units (central processing units, CPUs) 2101 and a memory 2105. The memory 2105 stores one or more application programs or data.

The memory 2105 may be volatile storage or persistent storage. A program stored in the memory 2105 may include one or more modules, and each module may include a series of instruction operations for the processing device. Further, the central processing unit 2101 may be configured to communicate with the memory 2105, and perform, on the processing device 2100, the series of instruction operations that are in the memory 2105.

The processing device 2100 may further include one or more power supplies 2102, one or more wired or wireless network interfaces 2103, one or more transceiver interfaces 2104, and/or one or more operating systems such as Windows ServerTM, Mac OS XTM, UnixTM, LinuxTM, and FreeBSDTM.

The processing device 2100 may perform the operations performed by the processing device in embodiments shown in FIG. 4 to FIG. 17. Details are not described herein again.

It may be clearly understood by a person skilled in the art that, for the purpose of convenient and brief description, for a detailed working procedure of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

## Claims

1. An information processing method, wherein the method is applied to a processing device in a detection system, the detection system further comprises at least two sensors, detection information obtained by the at least two sensors comprises detection information separately from the at least two sensors for at least two same target objects, and the method comprises:
obtaining, by the processing device, at least two pieces of detection information from the at least two sensors, wherein the at least two sensors are in a one-to-one correspondence with the at least two pieces of detection information;
determining, by the processing device, at least two pieces of corresponding formation information based on the at least two pieces of detection information, wherein each piece of formation information is used to describe a position relationship between objects detected by the corresponding sensors, and the objects comprise the target objects;
determining, by the processing device, target formation information based on the at least two pieces of formation information, wherein a matching degree between the target formation information and each of the at least two pieces of formation information is greater than a preset threshold, the target formation information is used to describe a position relationship between the at least two target objects, and the target formation information comprises formation position information of target objects; and
fusing, by the processing device based on formation position information of any one of the target objects, the detection information that is in the at least two pieces of formation information and that corresponds to a same target object.

2. The method according to claim 1, wherein the detection information comprises a position feature set, the position feature set comprises at least two position features, and the position features indicate position relationships between the objects detected by the corresponding sensors and objects around the objects.

3. The method according to claim 2, wherein the determining, by the processing device, at least two pieces of corresponding formation information based on the at least two pieces of detection information comprises:
obtaining, by the processing device based on at least two position feature sets, at least two pieces of corresponding line touch information, wherein each of the at least two pieces of line touch information is used to describe information that the objects detected by the corresponding sensors touch a reference line, and the at least two pieces of line touch information are in a one-to-one correspondence with the at least two position feature sets; and
separately determining, by the processing device, the at least two pieces of corresponding formation information based on the at least two pieces of line touch information, wherein the at least two pieces of line touch information are in a one-to-one correspondence with the at least two pieces of formation information.

4. The method according to claim 3, wherein
the line touch information comprises time sequence information and touch point partition information that the objects detected by the corresponding sensors touch the reference line, and the touch point partition information indicates partition information of touch points that are on the reference line and at which the objects touch the reference line;
the formation information comprises a touch partition sequence, and the touch partition sequence indicates a time sequence relationship between partition positions in which the objects detected by the corresponding sensors touch the reference line;
the determining, by the processing device, target formation information based on the at least two pieces of formation information comprises:
obtaining, by the processing device, first subsequences of at least two touch partition sequences, and using the first subsequence as the target formation information, wherein matching degrees between the first subsequences and the at least two touch partition sequences are greater than a first threshold; and
the fusing, by the processing device based on the formation position information of target objects, the detection information that is in the at least two pieces of formation information and that corresponds to a same target object comprises:
fusing, by the processing device based on the touch point partition information that is in the first subsequence and that corresponds to each target object, the detection information that is in the at least two touch partition sequences and that corresponds to the same target object.

5. The method according to claim 3, wherein
the line touch information comprises time sequence information and touch time interval information that the objects detected by the corresponding sensors touch the reference line, and the touch time interval information indicates a time interval at which the objects touch the reference line;
the formation information comprises a touch interval sequence, and the touch interval sequence indicates distribution of time intervals at which the objects detected by the corresponding sensors touch the reference line;
the determining, by the processing device, target formation information based on the at least two pieces of formation information comprises:
obtaining, by the processing device, second subsequences of at least two touch interval sequences, and using the second subsequence as the target formation information, wherein matching degrees between the second subsequences and the at least two touch interval sequences are greater than a second threshold; and
the fusing, by the processing device based on the formation position information of target objects, the detection information that is in the at least two pieces of formation information and that corresponds to a same target object comprises:
fusing, by the processing device based on touch time distribution information that is in the second subsequence and that corresponds to each target object, the detection information that is in the at least two touch interval sequences and that corresponds to the same target object.

6. The method according to claim 3, wherein
the line touch information comprises time sequence information, touch point partition information, and touch time interval information that the objects detected by the corresponding sensors touch the reference line, the touch point partition information indicates partition information of touch points that are on the reference line and at which the objects touch the reference line, and the touch time interval information indicates a time interval at which the objects touch the reference line;
the formation information comprises a touch partition sequence and a touch interval sequence, the touch partition sequence indicates a time sequence relationship between partition positions in which the objects detected by the corresponding sensors touch the reference line, and the touch interval sequence indicates distribution of time intervals at which the objects detected by the corresponding sensors touch the reference line; and
the determining, by the processing device, target formation information based on the at least two pieces of formation information comprises:
obtaining, by the processing device, first subsequences of at least two touch partition sequences, wherein matching degrees between the first subsequences and the at least two touch partition sequences are greater than a first threshold;
obtaining, by the processing device, second subsequences of at least two touch interval sequences, wherein matching degrees between the second subsequences and the at least two touch interval sequence are greater than a second threshold;
determining, by the processing device, an intersection of a first object set and a second object set, and using the intersection as a target object set, wherein the first object set is a set of objects corresponding to the first subsequence, and the second object set is a set of objects corresponding to the second subsequence; and
using, by the processing device, the touch partition sequence and the touch interval sequence of the target object set as the target formation information.

7. The method according to claim 2, wherein the formation information comprises a target group distribution graph, and the target group distribution graph indicates a position relationship between the objects;
the determining, by the processing device, at least two pieces of corresponding formation information based on the at least two pieces of detection information comprises:
obtaining, by the processing device, at least two corresponding initial target group distribution graphs based on at least two position feature sets, wherein the initial target group distribution graph indicates a position relationship between the objects detected by the corresponding sensors;
obtaining, by the processing device, standard viewport graphs of the at least two initial target group distribution graphs by using a viewport change algorithm, and using at least two standard viewport graphs as at least two corresponding target group distribution graphs, wherein formation position information of the target group distribution graph comprises target object distribution information of the target objects, and the target object distribution information indicates positions of the target objects in the objects detected by the corresponding sensors;
the determining, by the processing device, target formation information based on the at least two pieces of formation information comprises:
obtaining, by the processing device, image feature sets of the at least two target group distribution graphs, and using the image feature set as the target formation information, wherein matching degrees between the image feature sets and the at least two target group distribution graphs are greater than a third threshold; and
the fusing, by the processing device based on the formation position information of target objects, the detection information that is in the at least two pieces of formation information and that corresponds to a same target object comprises:
fusing, by the processing device based on the target object distribution information that is in the image feature set and that corresponds to each target object, the detection information that is in the at least two target group distribution graphs and that corresponds to the same target object.

8. The method according to claim 7, wherein the method further comprises:
obtaining, by the processing device based on the at least two position feature sets, at least two pieces of line touch information of the target objects corresponding to the position feature sets, wherein each of the at least two pieces of line touch information is used to describe information that the objects detected by the corresponding sensors touch a reference line, and the at least two pieces of line touch information are in a one-to-one correspondence with the at least two position feature sets; and
the obtaining, by the processing device, at least two corresponding initial target group distribution graphs based on at least two position feature sets comprises:
obtaining, by the processing device, the at least two corresponding initial target group distribution graphs based on the at least two pieces of line touch information, wherein objects in the at least two initial target group distribution graphs have same line touch information.

9. The method according to any one of claims 1 to 8, wherein the at least two sensors comprise a first sensor and a second sensor, a spatial coordinate system corresponding to the first sensor is a standard coordinate system, a spatial coordinate system corresponding to the second sensor is a target coordinate system, and the method further comprises:
determining, by the processing device based on fused detection information obtained by fusing the detection information that is in the at least two pieces of formation information and that corresponds to the same target object, mapping relationships between at least two pieces of standard point information and at least two pieces of target point information, wherein the standard point information indicates position information of objects that are in the target object set and that are in the standard coordinate system, the target point information indicates position information of the objects that are in the target object set and that are in the target coordinate system, and the at least two pieces of standard point information are in a one-to-one correspondence with the at least two pieces of target point information; and
determining, by the processing device, a mapping relationship between the standard coordinate system and the target coordinate system based on the mapping relationship between the standard point information and the target point information.

10. The method according to any one of claims 1 to 9, wherein the method further comprises:
calculating, by the processing device, a time difference between time axes of the at least two sensors based on a fusion result of the detection information that is in the at least two pieces of formation information and that corresponds to the same target object.

11. The method according to any one of claims 1 to 10, wherein the at least two sensors comprise a standard sensor and a to-be-detected sensor, and the method further comprises:
obtaining, by the processing device, standard formation information that is in the target formation information and that corresponds to the standard sensor;
obtaining, by the processing device, to-be-detected formation information that is in the target formation information and that corresponds to the to-be-detected sensor;
determining, by the processing device, a difference between the to-be-detected formation information and the standard formation information; and
obtaining, by the processing device, an error parameter based on the difference and the standard formation information, wherein the error parameter indicates an error of the to-be-detected formation information, or indicates a performance parameter of the to-be-detected sensor.

12. A processing device, wherein the processing device is located in a detection system, the detection system further comprises at least two sensors, detection information obtained by the at least two sensors comprises detection information separately from the at least two sensors for at least two same target objects, and the processing device comprises a processor and a transceiver;
the transceiver is configured to obtain at least two pieces of the detection information from the at least two sensors, wherein the at least two sensors are in a one-to-one correspondence with the at least two pieces of detection information, and
the processor is configured to:
determine at least two pieces of corresponding formation information based on the at least two pieces of detection information, wherein each piece of formation information is used to describe a position relationship between objects detected by the corresponding sensors, and the objects comprise the target objects;
determine target formation information based on the at least two pieces of formation information, wherein a matching degree between the target formation information and each of the at least two pieces of formation information is greater than a preset threshold, the target formation information is used to describe a position relationship between the at least two target objects, and the target formation information comprises formation position information of target objects; and
fuse, based on formation position information of any one of the target objects, the detection information that is in the at least two pieces of formation information and that corresponds to a same target object.

13. The processing device according to claim 12, wherein the detection information comprises a position feature set, the position feature set comprises at least two position features, and the position features indicate position relationships between the objects detected by the corresponding sensors and objects around the objects.

14. The processing device according to claim 13, wherein the processor is specifically configured to:
obtain at least two pieces of corresponding line touch information based on at least two position feature sets, wherein each of the at least two pieces of line touch information is used to describe information that the objects detected by the corresponding sensors touch a reference line, and the at least two pieces of line touch information are in a one-to-one correspondence with the at least two position feature sets; and
separately determine the at least two pieces of corresponding formation information based on the at least two pieces of line touch information, wherein the at least two pieces of line touch information are in a one-to-one correspondence with the at least two pieces of formation information.

15. The processing device according to claim 14, wherein
the line touch information comprises time sequence information and touch point partition information that the objects detected by the corresponding sensors touch the reference line, and the touch point partition information indicates partition information of touch points that are on the reference line and at which the objects touch the reference line;
the formation information comprises a touch partition sequence, and the touch partition sequence indicates a time sequence relationship between partition positions in which the objects detected by the corresponding sensors touch the reference line; and
the processor is specifically configured to:
obtain first subsequences of at least two touch partition sequences, and use the first subsequence as the target formation information, wherein matching degrees between the first subsequences and the at least two touch partition sequences are greater than a first threshold; and
fuse, based on the touch point partition information that is in the first subsequence and that corresponds to each target object, the detection information that is in the at least two touch partition sequences and that corresponds to the same target object.

16. The processing device according to claim 14, wherein
the line touch information comprises time sequence information and touch time interval information that the objects detected by the corresponding sensors touch the reference line, and the touch time interval information indicates a time interval at which the objects touch the reference line;
the formation information comprises a touch interval sequence, and the touch interval sequence indicates distribution of time intervals at which the objects detected by the corresponding sensors touch the reference line; and
the processor is specifically configured to:
obtain second subsequences of at least two touch interval sequences, and use the second subsequence as the target formation information, wherein matching degrees between the second subsequences and the at least two touch interval sequences are greater than a second threshold; and
fuse, based on touch time distribution information that is in the second subsequence and that corresponds to each target object, the detection information that is in the at least two touch interval sequences and that corresponds to the same target object.

17. The processing device according to claim 14, wherein
the line touch information comprises time sequence information, touch point partition information, and touch time interval information that the objects detected by the corresponding sensors touch the reference line, the touch point partition information indicates partition information of touch points that are on the reference line and at which the objects touch the reference line, and the touch time interval information indicates a time interval at which the objects touch the reference line;
the formation information comprises a touch partition sequence and a touch interval sequence, the touch partition sequence indicates a time sequence relationship between partition positions in which the objects detected by the corresponding sensors touch the reference line, and the touch interval sequence indicates distribution of time intervals at which the objects detected by the corresponding sensors touch the reference line; and
the processor is specifically configured to:
obtain first subsequences of at least two touch partition sequences, wherein matching degrees between the first subsequences and the at least two touch partition sequences are greater than a first threshold;
obtain second subsequences of at least two touch interval sequences, wherein matching degrees between the second subsequences and the at least two touch interval sequences are greater than a second threshold;
determine an intersection of a first object set and a second object set, and use the intersection as a target object set, wherein the first object set is a set of objects corresponding to the first subsequence, and the second object set is a set of objects corresponding to the second subsequence; and
use the touch partition sequence and the touch interval sequence of the target object set as the target formation information.

18. The processing device according to claim 13, wherein the formation information comprises a target group distribution graph, and the target group distribution graph indicates a position relationship between the objects;
the processor is specifically configured to:
obtain at least two corresponding initial target group distribution graphs based on at least two position feature sets, wherein the initial target group distribution graph indicates a position relationship between objects detected by the corresponding sensors; and
obtain standard viewport graphs of the at least two initial target group distribution graphs by using a viewport change algorithm, and use at least two standard viewport graphs as at least two corresponding target group distribution graphs, wherein formation position information of the target group distribution graph comprises target object distribution information of the target objects, and the target object distribution information indicates positions of the target objects in the objects detected by the corresponding sensors;
the processor is specifically configured to:
obtain image feature sets of the at least two target group distribution graphs, and use the image feature set as the target formation information, wherein matching degrees between the image feature sets and the at least two target group distribution graphs are greater than a third threshold; and
the processor is specifically configured to:
fuse, based on the target object distribution information that is in the image feature set and that corresponds to each target object, the detection information that is in the at least two target group distribution graphs and that corresponds to the same target object.

19. The processing device according to claim 18, the processor is further configured to:
obtain, based on the at least two position feature sets, at least two pieces of line touch information of the target objects corresponding to the image feature set, wherein each of the at least two pieces of line touch information is used to describe information that the objects detected by the corresponding sensors touch a reference line, and the at least two pieces of line touch information are in a one-to-one correspondence with the at least two position feature sets; and
the processor is specifically configured to obtain the at least two corresponding initial target group distribution graphs based on the at least two pieces of line touch information, wherein objects in the at least two initial target group distribution graphs have same line touch information.

20. The processing device according to any one of claims 12 to 19, wherein the at least two sensors comprise a first sensor and a second sensor, a spatial coordinate system corresponding to the first sensor is a standard coordinate system, a spatial coordinate system corresponding to the second sensor is a target coordinate system, and the processor is further configured to:
determine, based on fused detection information obtained by fusing the detection information that is in the at least two pieces of formation information and that corresponds to the same target object, mapping relationships between at least two pieces of standard point information and at least two pieces of target point information, wherein the standard point information indicates position information of objects that are in the target object set and that are in the standard coordinate system, the target point information indicates position information of the objects that are in the target object set and that are in the target coordinate system, and the at least two pieces of standard point information are in a one-to-one correspondence with the at least two pieces of target point information; and
determine a mapping relationship between the standard coordinate system and the target coordinate system based on the mapping relationship between the standard point information and the target point information.

21. The processing device according to any one of claims 12 to 20, wherein the processor is further configured to calculate a time difference between time axes of the at least two sensors based on a fusion result of the detection information that is in the at least two pieces of formation information and that corresponds to the same target object.

22. The processing device according to any one of claims 12 to 21, wherein the at least two sensors comprise a standard sensor and a to-be-detected sensor, and the processor is further configured to:
obtain standard formation information that is in the target formation information and that corresponds to the standard sensor;
obtain to-be-detected formation information that is in the target formation information and that corresponds to the to-be-detected sensor;
determine a difference between the to-be-detected formation information and the standard formation information, and
obtain an error parameter based on the difference and the standard formation information, wherein the error parameter indicates an error of the to-be-detected formation information, or indicates a performance parameter of the to-be-detected sensor.

23. A processing device, comprising:
a processor and a memory coupled to the processor, wherein
the memory stores executable instructions executed by the processor, and the executable instructions instruct the processor to perform the method according to any one of claims 1 to 11.

24. A computer-readable storage medium, wherein the computer-readable storage medium stores a program, and when a computer executes the program, the method according to any one of claims 1 to 11 is performed.

25. A computer program product, wherein when the computer program product is executed on a computer, the computer performs the method according to any one of claims 1 to 11.
